(19) Europäisches Patentamt
European Patent Office
Office européen des brevets

(11) **EP 2 448 056 A1**

(12) **EUROPEAN PATENT APPLICATION**
published in accordance with Art. 153(4) EPC

(43) Date of publication:
**02.05.2012 Bulletin 2012/18**

(21) Application number: **10791831.0**

(22) Date of filing: **21.06.2010**

(51) Int Cl.:
***H01M 10/0567*** *(2010.01)* ***H01M 4/505*** *(2010.01)*
***H01M 4/525*** *(2010.01)* ***H01M 4/587*** *(2010.01)*
***H01M 10/0525*** *(2010.01)* ***H01M 10/0569*** *(2010.01)*

(86) International application number:
**PCT/JP2010/004121**

(87) International publication number:
**WO 2010/150508 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.06.2009 JP 2009147601**
**06.07.2009 JP 2009159477**

(71) Applicant: **Hitachi Vehicle Energy, Ltd.**
**Hitachinaka-shi**
**Ibaraki 312-0061 (JP)**

(72) Inventors:
- **INOUE, Ryo**
  **Hitachi-shi**
  **Ibaraki 319-1292 (JP)**
- **TSUBOUCHI, Shigetaka**
  **Hitachi-shi**
  **Ibaraki 319-1292 (JP)**
- **OKUMURA, Takefumi**
  **Hitachi-shi**
  **Ibaraki 319-1292 (JP)**

(74) Representative: **Beetz & Partner**
**Patentanwälte**
**Steinsdorfstrasse 10**
**80538 München (DE)**

# (54) LITHIUM-ION SECONDARY BATTERY

(57) Disclosed is a lithium-ion secondary battery which includes a carbonaceous material in an anodic active material mix, and a cyclic carbonate and a chain carbonate both in an electrolytic solution. The solvent contains an additive which is a substance having a LUMO energy determined through molecular orbital calculation of lower than the LUMO energy of ethylene carbonate determined through molecular orbital calculation and having a HOMO energy lower than the HOMO energy of vinylene carbonate determined through molecular orbital calculation, the electrolytic solution contains $LiPF_6$ or $LiBF_4$ as an electrolyte, and the electrolytic solution shows a reduction-reaction current of -0.05 mA/cm$^2$ (provided that a reaction current on the reducing side be negative) or less at a potential lower than 1 V and shows an oxidation-reaction current of 0.5 mA/cm$^2$ (provided that a reaction current on the oxidizing side be positive) or more at a potential higher than 5. 7 V in an LSV measurement at a potential sweep rate of 1 mV/s using a glassy-carbon disk electrode as a working electrode, a platinum electrode as a counter electrode, and a lithium electrode as a reference electrode.

FIG. 2

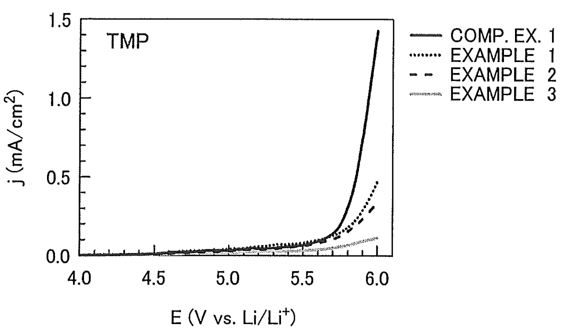


EP 2 448 056 A1

**Description**

Technical Field

The present invention relates to a novel lithium-ion secondary battery which has satisfactory output performance and is suitable typically for hybrid electric vehicles.

Background Art

Hybrid electric vehicles (HVs) using both an engine and a motor as power sources have been developed and introduced commercially, in consideration of environmental protection and energy savings. In addition, plug-in hybrid electric vehicles (PHVs) having a power supply system capable of supplying an electric power from electric plugs are now being developed. Secondary batteries, which are capable of undergoing repeated charging and discharging cycles, are used also as energy sources for such hybrid electric vehicles.
Of such secondary batteries, lithium-ion secondary batteries have higher operating voltages and more easily give high outputs than other secondary batteries such as nickel metal hydride batteries, are thereby promising as power sources for hybrid electric vehicles and electric vehicles, and probably become more important in the future.
Electrolytic solutions of lithium-ion secondary batteries, which can be operated theoretically within a broad range of voltages, require satisfactory voltage endurance properties and thereby employ organic electrolytic solutions each containing an organic compound as a solvent.
Among them, electrolytic solutions each containing a lithium salt as an electrolyte and a carbonate as a solvent are widely used as electrolytic solutions for lithium-ion secondary batteries, because the electrolytic solutions help the batteries to have a high electric conductivity and show a wide potential window.
However, such an electrolytic solution containing a lithium salt and a carbonate solvent is known to cause reactions on the surface of the anode of the lithium-ion secondary battery. This may cause the electrolytic solution to deteriorate and cause the battery to have a shorter life. To suppress these electrode reactions to thereby elongate the battery lives, an additive having a reduction reaction potential higher than that of the solvent is often added to an electrolytic solution. The additive reductively decomposes in itself to form inert films on the electrode to thereby suppress the electrode reaction between the electrolytic solution and the anode.
The additive, however, does not form a thick film on the cathode as thick as the film on the anode, although the film formed on the anode is effectively thick to prevent the electrode reaction. Accordingly, an oxidation reaction of the additive occurs at low potentials, and this induces, for example, oxidative decomposition of the electrolytic solution and/or peeling off of an active material due to a decomposition reaction inside the active material, resulting in an increased resistance of the cathode. Accordingly, it is necessary for lowering the resistance of the battery to select such an additive as to form a film suppressing side reactions on the anode but as not to react at low oxidation potentials.
The oxidation-reduction characteristics of each of an electrolyte, a solvent, and an additive in an electrolytic solution are roughly estimated by a highest occupied molecular orbital (HOMO) energy and a lowest unoccupied molecular orbital (LUMO) energy determined through molecular orbital calculation. However, there is a fundamental difference in physical model between the electrochemical phenomenon in a solution including such a mixture of an electrolyte, a solvent, and an additive and the molecular orbital calculation which addresses one molecule in a vacuum. For this reason, the oxidation-reduction characteristics should be estimated through a measurement analogous or similar to the actual system.
An exemplary technique for evaluating the oxidation-reduction characteristics of an additive is a technique of estimating magnitudes or degrees of oxidation-reduction characteristics based on the relation between a sweep potential and a reaction current, in linear sweep voltammetry(LSV) or cyclic voltammetry (CV) measurements of an electrolytic solution containing the additive. This technique, however, has some points to note. The first point is that the relation between the sweep potential and the reaction current may vary even in an identical electrolytic solution system, unless the electrode composition and the potential sweep rate in the measurement system are specified. It is basically preferred to use, as electrodes, electrodes having low reactivity, such as a platinum electrode and a glassy carbon electrode. The second point is that the measurement should be performed in an electrolytic solution system having a composition relatively similar to the electrolytic solution composition of an actual battery.
Typically, the technique disclosed in Patent Literature (PTL) 1 searches an optimal electrolytic solution composition using data obtained by cyclic voltammetry. However, this technique fails to specify the compositions of all the components in the electrolytic solution. The additive does not exist independently in the electrolytic solution but interacts with the solvent and dissociated ions constituting the electrolyte. The interactions cause a change in electronic state in the molecule of additive, and this in turn causes a change in oxidative and reductive reactivities. However, the measurements are not always performed while employing a completely identical composition but may be performed within such a range of compositions as to give the same or similar results in the LSV measurement and CV measurement.

Carbon materials for use in the anode on which a surface film is to be formed are roughly classified as a carbonaceous material having, as determined by X-ray diffractometry, an average interlayer distance $d_{002}$ between the (002) planes of from 0.38 to 0.4 nm (this type of material is herein defined as a "hard carbon" (nongraphitizable carbon)); a carbonaceous material having an average interlayer distance $d_{002}$ of from 0. 34 nm to 0.37 nm (this type of material is herein defined as a "soft carbon" (graphitizable carbon)), and a carbonaceous material having an average interlayer distance $d_{002}$ of from 0.335 nm to 0.34 nm (this type of material is herein defined as a "graphite"). These carbonaceous materials have different amounts of lithium occlusion per weight, indicating that they differ in quantity of electrochemical reactions. It is necessary for the efficient formation of a low-resistance film on the electrode surface to specify the amount of an additive suitable for each carbonaceous material.

The above-mentioned effects are hardly exhibited when the battery shows a high contact resistance. To avoid this, the electrodes should have satisfactory current-collecting capabilities at certain levels.

As is described above, for suppressing the deterioration of an electrolytic solution and thereby preparing a high-output lithium-ion battery, it is necessary to investigate the compositions and ratios of an electrolyte, an additive, and a solvent constituting the electrolytic solution, to investigate the anodic material, and to search optimal configurations of them.

PTL 1 discloses a lithium-ion secondary battery using a cyclic carbonate and a chain carbonate in an electrolytic solution. An anodic active material mix used therein is a carbonaceous material having an average interlayer distance between the (002) planes of from 0.335 to 0.34 nm. Citation List

Patent Literature

PTL 1: Japanese Unexamined Patent Application Publication (JP-A) No. 2004-14134

Summary of Invention

Technical Problem

An object of the present invention is to provide a lithium-ion secondary battery which less suffers from the deterioration of an electrolytic solution and is thereby capable of providing a high output.

Solution to Problem

To achieve the object, the present invention provides a lithium-ion secondary battery, in which the battery includes an anodic active material mix containing a carbonaceous material having an average interlayer distance between the (002) planes of from 0.38 to 0.4 nm as determined through X-ray diffractometry,
the battery includes an electrolytic solution including a solvent, an additive, and an electrolyte,
the solvent contains a cyclic carbonate and a chain carbonate in a total content of more than 95 percent by volume based on the total volume of the solvent, the cyclic carbonate being represented by (Formula 1):

[Chem. 1]

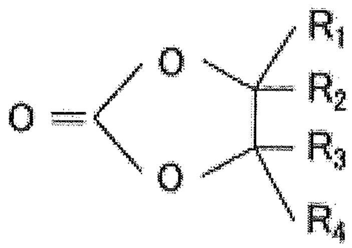

(Formula 1)

wherein $R_1$, $R_2$, $R_3$, and $R_4$ each independently represent one selected from the group consisting of hydrogen, an alkyl group having 1 to 3 carbon atoms, hydrogen, and a halogenated alkyl group having 1 to 3 carbon atoms,
and the chain carbonate being represented by (Formula 2):

[Chem. 2]

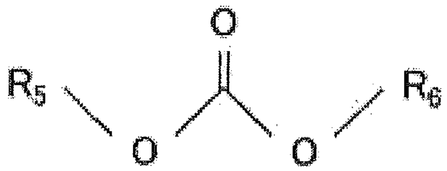

(Formula 2)

wherein $R_5$ and $R_6$ each independently represent one selected from the group consisting of an alkyl group having 1 to 3 carbon atoms and a halogenated alkyl group having 1 to 3 carbon atoms,
the additive is a substance having a lowest unoccupied molecular orbital (LUMO) energy determined through molecular orbital calculation of lower than the LUMO energy of ethylene carbonate determined through molecular orbital calculation and having a highest occupied molecular orbital (HOMO) energy of lower than the HOMO energy of vinylene carbonate determined through molecular orbital calculation, and
the electrolytic solution including the solvent, the additive, and the electrolyte shows a reduction-reaction current of -0.05 $mA/cm^2$ (provided that a reaction current on the reducing side be negative) or less at a potential lower than 1 V and shows an oxidation-reaction current of 0.5 $mA/cm^2$ (provided that a reaction current on the oxidizing side be positive) or more at a potential higher than 5.7 V in a linear sweep voltammetry (LSV) measurement at a potential sweep rate of 1 mV/s using a glassy-carbon disk electrode as a working electrode, a platinum electrode as a counter electrode, and a lithium electrode as a reference electrode.

The lithium-ion secondary battery has a lower direct-current resistance (DCR) in the electrolytic solution and has a longer life than customary equivalents, by selecting the compositions of the solvent, additive, and electrolyte in the electrolytic solution as above. This also improves the battery output per one battery, thereby reduces the number of batteries necessary for a battery pack (module), and reduces the size and weight of the resulting battery module, thus being effective.

Advantageous Effects of Invention

The lithium-ion secondary battery according to the present invention has a longer life than those of customary lithium-ion secondary batteries. The battery also shows a higher battery output per one battery, thereby helps to reduce the number of batteries necessary for a battery pack (module), and gives a battery module with a smaller size and a smaller weight, thus being advantageous.

Brief Description of Drawings

[Fig. 1] Fig. 1 is a schematic view of a cell for the LSV measurement of a lithium-ion secondary battery.
[Fig. 2] Fig. 2 is a graph showing the results of the LSV measurements of lithium-ion secondary batteries according to examples of the present invention, and of a lithium-ion secondary battery according to a comparative example.
[Fig. 3] Fig. 3 is a graph showing the results of the LSV measurements of lithium-ion secondary batteries according to other examples of the present invention and of a lithium-ion secondary battery according to another comparative example.
[Fig. 4] Fig. 4 is a graph showing the results of the LSV measurements of lithium-ion secondary batteries according to yet other examples of the present invention, and of a lithium-ion secondary battery according to yet another comparative example.
[Fig. 5] Fig. 5 is a graph showing the results of the LSV measurements of lithium-ion secondary batteries according to still other examples of the present invention, and of a lithium-ion secondary battery according to still another comparative example.
[Fig. 6] Fig. 6 is a graph showing the results of the LSV measurements of lithium-ion secondary batteries according to other comparative examples.
[Fig. 7] Fig. 7 is a graph showing the results of the LSV measurements of lithium-ion secondary batteries according to yet other comparative examples.
[Fig. 8] Fig. 8 is a graph showing the results of the LSV measurements of lithium-ion secondary batteries according to still other comparative examples.

[Fig. 9] Fig. 9 is a graph showing the results of the LSV measurements of lithium-ion secondary batteries according to other comparative examples.

[Fig. 10] Fig. 10 is a graph showing the results of the LSV measurements of lithium-ion secondary batteries according to yet other comparative examples.

[Fig. 11] Fig. 11 is a graph showing the results of the LSV measurements of lithium-ion secondary batteries according to other examples of the present invention, and of a lithium-ion secondary battery according to another comparative example.

[Fig. 12] Fig. 12 is a graph showing the results of the LSV measurements of lithium-ion secondary batteries according to yet other examples of the present invention, and of a lithium-ion secondary battery according to yet another comparative example.

[Fig. 13] Fig. 13 is a graph showing the results of the LSV measurements of lithium-ion secondary batteries according to still other examples of the present invention, and of a lithium-ion secondary battery according to still another comparative example.

[Fig. 14] Fig. 14 is a graph showing the results of the LSV measurements of lithium-ion secondary batteries according to other examples of the present invention, and of a lithium-ion secondary battery according to another comparative example.

[Fig. 15] Fig. 15 is a graph showing the results of the LSV measurements of lithium-ion secondary batteries according to other comparative examples.

[Fig. 16] Fig. 16 is a graph showing the results of the LSV measurements of lithium-ion secondary batteries according to other comparative examples.

[Fig. 17] Fig. 17 is a graph showing the results of the LSV measurements of lithium-ion secondary batteries according to other comparative examples.

[Fig. 18] Fig. 18 is a graph showing the results of the LSV measurements of lithium-ion secondary batteries according to other comparative examples.

[Fig. 19] Fig. 19 is a graph showing the results of the LSV measurements of lithium-ion secondary batteries according to other comparative examples.

[Fig. 20] Fig. 20 is a schematic half sectional view of a spirally wound lithium-ion secondary battery to which the present invention is adopted.

Description of Embodiments

Some embodiments according to the present invention will be illustrated below. It should be noted, however, the following embodiments are never intended to limit the scope of the present invention.

(1) In an embodiment of the lithium-ion secondary battery, the additive is at least one substance selected from the group consisting of phosphotriester derivatives, cyclic phosphorus compounds, sulfone derivatives, cyclic sultone derivatives, and chain ester derivatives.

(2) In another embodiment, the additive is at least one substance selected from the group consisting of a phosphotriester derivative represented by (Formula 3):

[Chem. 3]

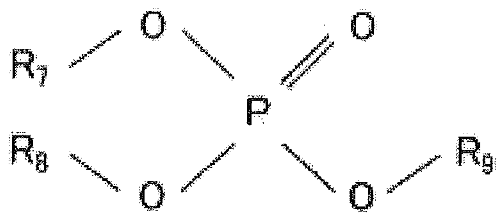

(Formula 3)

wherein $R_7$, $R_8$, and $R_9$ each independently represent one selected from the group consisting of an alkyl group having 1 to 3 carbon atoms, a halogenated alkyl group having 1 to 3 carbon atoms, and a halogen;
a phosphorus compound represented by (Formula 4):

[Chem. 4]

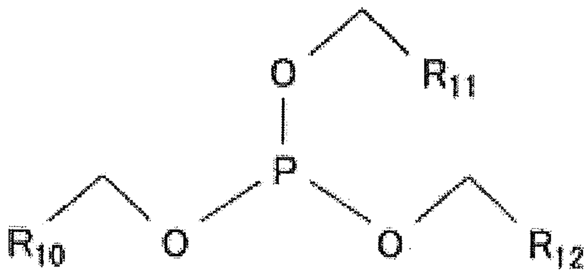

(Formula 4)

wherein $R_{10}$, $R_{11}$, and $R_{12}$ each independently represent one selected from the group consisting of hydrogen, an alkyl group having 1 to 3 carbon atoms, a halogenated alkyl group having 1 to 3 carbon atoms, and a halogen;
a cyclic sulfone derivative represented by (Formula 5):

[Chem. 5]

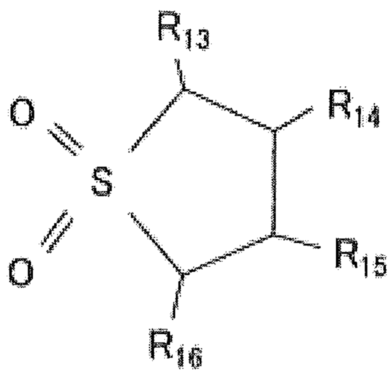

(Formula 5)

wherein $R_{13}$, $R_{14}$, $R_{15}$, and $R_{16}$ each independently represent one selected from the group consisting of hydrogen, an alkyl group having 1 to 3 carbon atoms, a halogenated alkyl group having 1 to 3 carbon atoms, and a halogen;
a cyclic sultone derivative represented by (Formula 6):

[Chem. 6]

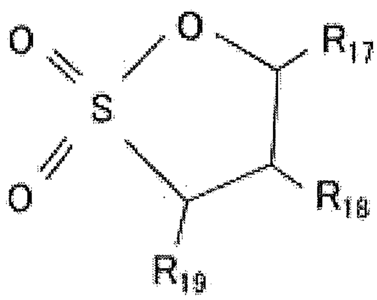

(Formula 6)

wherein $R_{17}$, $R_{18}$, and $R_{19}$ each independently represent one selected from the group consisting of hydrogen, an alkyl group having 1 to 3 carbon atoms, and a halogen having 1 to 3 carbon atoms; and

a chain ester derivative represented by (Formula 7):

[Chem. 7]

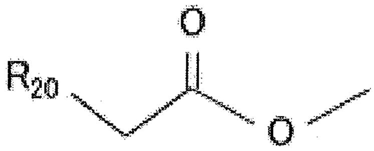

(Formula 7)

wherein $R_{20}$ represents one selected from the group consisting of an alkyl group having 1 to 3 carbon atoms, a halogenated alkyl group, a vinyl group, and a halogen.

(3) In yet another embodiment, the electrolytic solution including the two or more solvents, the additive, and the electrolyte has a direct-current resistance (DCR) of 0.5 or more and less than 1.0, provided that the direct-current resistance (DCR) of an electrolytic solution corresponding to the electrolytic solution, except for not containing the additive, be 1.

(4) The solvent in another embodiment contains the cyclic carbonate represented by (Formula 1) in a content of from 18 percent by volume to 30 percent by volume and the chain carbonate represented by (Formula 2) in a content of from 70 percent by volume to 82 percent by volume, based on the total volume of the solvent.

(5) In another embodiment, the total amount of the additive(s) is more than 0 percent by weight and 20 percent by weight or less relative to the total weight of a solution composed of the solvent and the electrolyte.

(6) The electrolytic solution, in another embodiment, contains the electrolyte in a concentration of from 0.5 mol/L to 2 mol/L relative to the total amount of the solvent and the additive.

(7) In another embodiment, the battery includes the cathode containing a lithium transition metal oxide represented by the formula: $LiMn_xM1_yM2_zO_2$, wherein M1 represents at least one element selected from Co and Ni; M2 represents at least one element selected from the group consisting of Co, Ni, A1, B, Fe, Mg, and Cr; and x, y, and z satisfy the following conditions: $x+y+z=1$, $0.2 \leq x \leq 0.6$, $0.2 \leq y \leq 0.6$, and $0.05 \leq z \leq 0.4$.

(8) In still another embodiment, the cyclic carbonate includes at least one of ethylene carbonate and propylene carbonate, and the chain carbonate includes at least one of dimethyl carbonate and ethyl methyl carbonate.

(9) In another embodiment, the cyclic carbonate is ethylene carbonate, and the chain carbonate is dimethyl carbonate and ethyl methyl carbonate.

(10) The solvent, in another embodiment, has a volume ratio of dimethyl carbonate to ethyl methyl carbonate of from 1.0 to 1.4.

(11) In an embodiment, the ratio of the total weight of the additive to the weight of the carbonaceous material is from 1.0 to 3.0.

(12) In an embodiment, the additive is trimethyl phosphate (TMP).

(13) In another embodiment, the additive is sulfolane (SL).

(14) In another embodiment, the additive is propane sultone (PS).

(15) In yet another embodiment, the additive is methyl fluoroacetate (MFA).

The oxidation reaction and reduction reaction of an additive are considered to occur mainly on the surfaces of cathode (positive electrode) and anode (negative electrode). Past investigations on additives, as is described in PTL 1, specified only the amount of an additive in an electrolytic solution regardless of the capacity (volume) of the battery and the areas of electrodes, and failed to specify the amount of the electrolytic solution in the battery as a whole. This causes the battery to suffer from unevenness in absolute quantities of oxidation and reduction reactions therein, resulting in unevenness or variation of battery performance. Among such parameters, the amounts of the anodic active material and additive, which are involved in the formation of films, should be specified.

The solvent represented by (Formula 1) is preferably a solvent which helps the electrolytic solution to have a higher degree of dissociation of a lithium salt and to show more satisfactory ionic conductivity, and has a lower reduction potential than that of the additive represented by (Formula 3). Examples of the solvent include ethylene carbonate (EC), propylene carbonate (PC), and butylene carbonate (BC). Of these, EC is most preferred because of having the highest dielectric constant, helping the electrolytic solution to have a higher degree of dissociation of a lithium salt, and allowing the electrolytic solution to be highly ionically conductive.

Exemplary solvents represented by (Formula 2) usable herein include dimethyl carbonate (DMC), ethyl methyl carbonate (EMC), diethyl carbonate (DEC), methyl propyl carbonate (MPC), and ethyl propyl carbonate (EPC).

DMC is a highly miscible solvent and is suitable in combination use as a mixture typically with EC. DEC has a melting point lower than that of DMC and is suitable for improving low-temperature characteristics of the battery at -30°C.

EMC has an asymmetric molecular structure, has a low melting point, and is thereby suitable for improving low-temperature characteristics of the battery. Of these, a solvent mixture containing EC, DMC, and EMC exhibits the highest effects, because the mixture helps the battery to ensure satisfactory battery properties at temperatures within a wide range.

The phosphotriester derivatives represented by (Formula 3) serving as additives are not limited, as long as the electrolytic solution shows a reduction-reaction current of -0.05 $mA/cm^2$ (provided that a reaction current on the reducing side be negative) or less at a potential lower than 1.0 V and shows an oxidation-reaction current of 0.5 $mA/cm^2$ (provided that a reaction current on the oxidizing side be positive) or more at a potential higher than 5. 7 V, in the LSV measurement, where the electrolytic solution contains the phosphotriester derivative (s) in a total content of more than 0 percent by weight and 20 percent by weight or less, relative to the total amount of the solvents. For avoiding increase in solution resistance of the electrolytic solution itself, preferred to be used is one or more compounds selected from the group consisting of trimethyl phosphate (TMP), ethyldimethyl phosphate, diethylmethyl phosphate, triethyl phosphate, dimethylfluoromethyl phosphate, methyl-di-(fluoromethyl) phosphate, tri-(fluoromethyl) phosphate, dimethyl-difluoromethyl phosphate, methyl-di-(difluoromethyl) phosphate, tri-(difluoromethyl) phosphate, dimethyl-trifluoromethyl phosphate, methyl-di-(trifluoromethyl) phosphate, and tri-(trifluoromethyl) phosphate. Among them, TMP is most preferred, because of its small molecular size.

The present inventors have found that the phosphorus compound represented by (Formula 4) serving as an additive is effective for trapping $PF_5$ which is formed from $LiPF_6$ through thermal decomposition. As the phosphorus compound, examples to be used are one or more compounds selected from the group consisting of tris(2,2,2-trifluoroethyl) phosphite, tris(2,2,2-difluoroethyl) phosphite, tris(2,2,2-fluoroethyl) phosphite, tris(2-fluoroethyl-2-difluoroethyl-2-trifluoroethyl) phosphite, and ethyl phosphite. The compound is contained in a content of preferably from 0.01 percent by weight to 5 percent by weight, and more preferably from 0.1 percent by weight to 2 percent by weight, relative to the weight of the weight of the solvent. The compound, if contained in an excessively high content, may cause the electrolytic solution to have a higher resistance.

The cyclic sulfone derivatives represented by (Formula 5) serving as additives are not limited, as long as the electrolyte shows a reduction-reaction current of -0. 05 $mA/cm^2$ (provided that a reaction current on the reducing side be negative) or less at a potential lower than 1.0 V and shows an oxidation-reaction current of 0.5 $mA/cm^2$ (provided that a reaction current on the oxidizing side be positive) or more at a potential higher than 5.7 V, in the LSV measurement where the electrolytic solution contains the cyclic sulfone derivative (s) in a total content of more than 0 percent by weight and less than 20 percent by weight relative to the total weight of a solution composed of the solvent mixture and the electrolyte salt. For avoiding increase in solution resistance of the electrolytic solution itself, preferred to be used is one or more compounds selected fromsulfolane (SL), 3-methylsulfolane, 2,4-dimethylsulfolane, 2,4-dimethylsulfolane, 2-fluorosulfolane, 3-fluorosulfolane, 3,3-difluorosulfolane, 2,4-difluorosulfolane, 3,4-difluorosulfolane, 2-fluoromethylsulfolane, 3-fluoromethylsulfolane, 2,4-difluoromethylsulfolane, 2-difluoromethylsulfolane, 3-difluoromethylsulfolane, 2-fluoromethyl-4-difluoromethylsulfolane, 2-fluoromethyl-4-trifluoromethylsulfolane, 2-trifluoromethylsulfolane, 3-trifluoromethylsulfolane, and 2,4-ditrifluoromethylsulfolane. Among them, SL is most preferred because of its small molecular size.

The cyclic sulfolane derivatives represented by (Formula 6) serving as additives are not limited, as long as the electrolyte shows a reduction-reaction current of -0. 05 $mA/cm^2$ (provided that a reaction current on the reducing side be negative) or less at a potential lower than 1.0 V and shows an oxidation-reaction current of 0.5 $mA/cm^2$ (provided that a reaction current on the oxidizing side be positive) or more at a potential higher than 5.7V, in the LSV measurement where the electrolytic solution contains the cyclic sulfolane derivative (s) in a total content of more than 0 percent by weight and less than 20 percent by weight relative to the total weight of a solution composed of the solvent mixture and the electrolyte salt. For avoiding increase in solution resistance of the electrolytic solution itself, preferred to be used is one or more compounds selected from 1,3-propane sultone (PS), 1-methyl-1,3-propane sultone, 2-methyl-1,3-propane sultone, 3-methyl-1,3-propane sultone, 1-ethyl-1.3-propane sultone, 2-ethyl-1,3-propane sultone, 3-ethyl-1,3-propane sultone, 1,2-dimethyl-1,3-propane sultone, 1,3-dimethyl-1,3-propane sultone, 2,3-dimethyl-1,3-propane sultone, 1-methyl-2-ethyl-1,3-propane sultone, 1-methyl-3-ethyl-1,3-propane sultone, 2-methyl-3-ethyl-1,3-propane sultone, 1-ethyl-2-methyl-1,3-propane sultone, 1-ethyl-3-methyl-1,3-propane sultone, 2-ethyl-3-methyl-1,3-propane sultone, 1-fluoromethyl-1,3-propane sultone, 2-fluoromethyl-1,3-propane sultone, 3-fluoromethyl-1,3-propane sultone, 1-trifluoromethyl-1,3-propane sultone, 2-trifluoromethyl-1,3-propane sultone, 3-trifluoromethyl-1,3-propane sultone, 1-fluoro-1,3-propane sultone, 2-fluoro-1,3-propane sultone, 3-fluoro-1,3-propane sultone, 1,2-difluoro-1,3-propane sultone, 1,3-difluoro-1,3-propane sultone, and 2,3-difluoro-1,3-propane sultone. Among them, PS is most preferred because of its small molecular size.

The chain ester derivatives represented by (Formula 7) serving as additives are not limited, as long as the electrolyte shows a reduction-reaction current of -0.05 $mA/cm^2$ (provided that a reaction current on the reducing side be negative) or less at a potential lower than 1.0 V and shows an oxidation-reaction current of 0.5 $mA/cm^2$ (provided that a reaction current on the oxidizing side be positive) or more at a potential higher than 5. 7 V, in the LSV measurement

where the electrolytic solution contains the chain ester derivative (s) in a total content of more than 0 percent by weight and less than 20 percent by weight relative to the total weight of a solution composed of the solvent mixture and the electrolyte salt. For avoiding increase in solution resistance of the electrolytic solution itself, typically preferred to be used is one or more compounds selected from the group consisting of methyl fluoroacetate (MFA), methyl difluoroacetate, methyl trifluoroacetate, methyl 1-fluoropropionate, methyl 1-difluoropropionate, methyl 1-trifluoropropionate, methyl 2-fluoropropionate, methyl 2-difluoropropionate, and methyl 2-trifluoropropionate. Of these, MFA is most preferred because of its small molecular size.

Though not limited, examples of lithium salts usable as electrolytes in the electrolytic solution include inorganic lithium salts such as $LiPF_6$, $LiBF_4$, $LiC10_4$, LiI, LiCl, and LiBr; and organic lithium salts such as $LiB(OCOCF_3)_4$, $LiB(OCOCF_2CF_3)_4$, $LiPF_9(CF_3)_2$, $LiN(SO_2CF_3)_2$, and $LiN(SO_2CF_2CF_3)_2$. Of these electrolytes, $LiBF_4$ and $LiPF_6$ are preferred, of which $LiPF_6$ is particularly preferred for stable quality and for high ionic conductivity in carbonate solvents.

A cathodic material is preferably a material represented by the compositional formula: $LiMn_xM1_yM2_zO_2$, wherein M1 represents at least one element selected from Co and Ni; M2 represents at least one element selected from Co, Ni, A1, B, Fe, Mg, and Cr; and x, y, and z satisfy the following conditions: x+y+z=1, 0.2≤x≤0.6, 0.2≤y≤0.6, and 0.05≤z≤0.4. Of such materials, preferred examples include $LiMn_{0.4}Ni_{0.4}Co_{0.2}O_2$, $LiMn_{1/3}Ni_{1/3}CO_{1/3}O_2$, $LiMn_{0.3}Ni_{0.4}Co_{0.3}O_2$, $LiMn_{0.35}Ni_{0.3}Co_{0.3}Al_{0.5}O_2$, $LiMn_{3.5}Ni_{0.3}Co_{0.3}B_{0.5}O_2$, $LiMn_{0.35}Ni_{0.3}Co_{0.3}Fe_{0.5}O_2$, and $LiMn_{0.35}Ni_{0.3}Co_{0.3}Mg_{0.5}O_2$. These materials are also generally referred to as cathodic active materials. In the composition, an increased content of Ni helps the battery to have a large capacity; an increased content of Co helps the battery to have a higher output at low temperatures; and an increased content of Mn helps the battery to have low material cost. Among them, $LiMn_{1/3}N_{1/3}Co_{1/3}O_2$ is most suitable as a lithium battery material for hybrid electric vehicles (HEVs) and electric vehicles, because of satisfactory low-temperature characteristics and good cycle stability: In addition, the added elements are effective to stabilize cycle characteristics. Exemplary cathodic materials usable herein further include orthorhombic symmetric phosphate compounds with space group Pnma, represented by General Formula: $LiM_xPO_4$, wherein M represents Fe or Mn; and x satisfies the following condition: 0.01≤x≤0.4, and $LiMn_{1-x}M_xPO_4$, wherein M represents a divalent cation other than that of Mn; and x satisfies the following condition: 0.01≤x≤0.4.

The battery exhibits the highest advantageous effects of the present invention when the anodic material is a hard carbon, however, the anodic material may further contain one or more materials within such ranges as not to reduce these advantageous effects. Typically, exemplary carbonaceous materials further include soft carbon (soft carbon) and graphite, as well as alloys of lithium or silicon.

The structure of the battery is not limited in the way to ensure a high current-collecting capability to electrodes, as long as collector foils of the cathode and anode are in direct contact with collector leads, respectively, but the battery preferably has such a structure that the collector foils are in contact with the collector leads in wide areas as large as possible.

EXAMPLES

(1) LSV Measurements

Fig. 1 is a schematic view of a cell for use in the LSV measurements. An LSV measurement cell was prepared by placing an electrolytic solution 6 to be measured in a vessel 1, and immersing a glassy-carbon disk electrode 3 having a diameter of 1 mm and serving as a working electrode, a platinum wire electrode 4 serving as a counter electrode, and a lithium electrode 5 serving as a reference electrode in the electrolytic solution. Using the LSV measurement cell, the potential was swept from an open circuit voltage (OCV) to 6 V (vs. $Li^+/Li$) on the oxidizing side and to 0 V (vs. $Li^+/Li$) on the reducing side at a sweep rate of 1 mV/s, and current values at respective potentials were determined.

(i) LSV Measurement on Oxidizing Side

(EXAMPLE 1)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution trimethyl phosphate (TMP, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 1.

(EXAMPLE 2)

An electrolytic solution was prepared by dissolving 1 mol/L of lithium salt $LiPF_6$ as an electrolyte in a 20: 40:

40 (by volume) solvent mixture of EC, DMC, and EMC to give a solution; and adding to the solution TMP in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 2.

(EXAMPLE 3)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution TMP in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 3.

(EXAMPLE 4)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution sulfolane (SL, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 4.

(EXAMPLE 5)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution SL in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 5.

(EXAMPLE 6)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution SL in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 6.

(EXAMPLE 7)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution 1,3-propane sultone (PS, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 7.

(EXAMPLE 8)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PS in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 8.

(EXAMPLE 9)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PS in an amount of 20 percent by weight relative to the total weight of the solution composed of the solvent mixture and the electrolyte salt.

The electrolytic solution was subjected to an LSV measurement on the oxidizing side using the LSV measurement cell, and the resulting data are indicated as Example 9.

(EXAMPLE 10)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution methyl fluoroacetate (MFA, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 10.

(EXAMPLE 11)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MFA in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 11.

(EXAMPLE 12)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MFA in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Example 12.

(COMPARATIVE EXAMPLE 1)

An electrolytic solution was prepared by dissolving 1 mol/L of lithium salt $LiPF_6$ in a 20: 40: 40 (by volume) solvent mixture of EC, DMC, and EMC. The electrolytic solution contained no additive. The electrolytic solution was subjected to an LSV measurement on the oxidizing side using the LSV measurement cell, and the resulting data are indicated as Comparative Example 1.

(COMPARATIVE EXAMPLE 2)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution vinylene carbonate (VC, additive) in an amount of 0.8 percent by weight relative to the total weight of the solution composed of the solvent mixture and the electrolyte salt. The resulting electrolytic solution contained an additive other than the additives selected according to the present invention. The electrolytic solution was subjected to an LSV measurement on the oxidizing side using the LSV measurement cell, and the resulting data are indicated as Comparative Example 2.

(COMPARATIVE EXAMPLE 3)

An electrolytic solution was prepared by dissolving 1 mol/L of lithium salt $LiPF_6$ as an electrolyte in a 20: 40 : 40 (by volume) solvent mixture of EC, DMC, and EMC to give a solution; and adding to the solution VC in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 3.

(COMPARATIVE EXAMPLE 4)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution VC in an amount of 20 percent by weigh relative to the total weight of the solution composed of the solvent mixture and the electrolyte salt. The electrolytic solution was subjected to an LSV measurement on the oxidizing side using the LSV measurement cell, and the resulting data are indicated as Comparative Example 4.

(COMPARATIVE EXAMPLE 5)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution propionic anhydride (PAH, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 5.

(COMPARATIVE EXAMPLE 6)

For an LSV measurement, an electrolytic solution was prepared by dissolving 1 mol/L of lithium salt $LiPF_6$ as an electrolyte in a 20:40:40 (by volume) solvent mixture of EC, DMC, and EMC to give a solution; and adding to the solution PAH in an amount of 4.8 percent by weight relative to the total weight of the solution composed of the solvent mixture and the electrolyte salt.
The electrolytic solution was subjected to an LSV measurement on the oxidizing side using the LSV measurement cell, and the resulting data are indicated as Comparative Example 6.

(COMPARATIVE EXAMPLE 7)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PAH in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 7.

(COMPARATIVE EXAMPLE 8)

An electrolytic solution was prepared by dissolving 1 mol/L of lithium salt $LiPF_6$ as an electrolyte in a 20:40:40 (by volume) solvent mixture of EC, DMC, and EMC to give a solution; and adding to the solution ethyl trifluoroacetate (ETFA, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 8.

(COMPARATIVE EXAMPLE 9)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution ETFA in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 9.

(COMPARATIVE EXAMPLE 10)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution ETFA in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 10.

(COMPARATIVE EXAMPLE 11)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution methyl acetoacetate (MAA, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 11.

(COMPARATIVE EXAMPLE 12)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MAA in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 12.

(COMPARATIVE EXAMPLE 13)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MAA in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 13.

(COMPARATIVE EXAMPLE 14)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution acetylacetone (AcAc, additive) in an amount of 0.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 14.

(COMPARATIVE EXAMPLE 15)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution AcAc in an amount of 4.8 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 15.

(COMPARATIVE EXAMPLE 16)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution AcAc in an amount of 20 percent by weight relative to the total weight of the solution composed of the solvent mixture and the electrolyte salt. The electrolytic solution was subjected to an LSV measurement on the oxidizing side using the LSV measurement cell, and the resulting data are indicated as Comparative Example 16.

Figs. 2 to 10 depict the resulting data of the LSV measurements on the oxidizing side regarding the electrolytic solutions containing additives TMP, SL, PS, MFA, VC, PAH, ETFA, MAA, and AcAc, respectively, in amounts of 0 percent by weight, 0.8 percent by weight, 4.8 percent by weight, and 20 percent by weight, relative to the total weight of the solution composed of the solvent mixture and the electrolyte salt.

(ii) LSV Measurement on Reducing Side

(EXAMPLE 13)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution TMP in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 13.

(EXAMPLE 14)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution TMP in an amount

of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 14.

(EXAMPLE 15)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution TMP in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Example 15.

(EXAMPLE 16)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MFA in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 16.

(EXAMPLE 17)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MFA in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 17.

(EXAMPLE 18)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MFA in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Example 18.

(EXAMPLE 19)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution SL in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 19.

(EXAMPLE 20)

An electrolytic solution was prepared by dissolving 1 mol/L of lithium salt $LiPF_6$ as an electrolyte in a 20:40:40 (by volume) solvent mixture of EC, DMC, and EMC to give a solution; and adding to the solution SL in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 20.

(EXAMPLE 21)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution SL in an amount of 20 percent by weight relative to the total weight of the solution composed of the solvent mixture and the electrolyte salt. The electrolytic solution was subjected to an LSV measurement on the reducing side using the LSV measurement cell;

and the resulting data are indicated as Example 21.

(EXAMPLE 22)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PS in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 22.

(EXAMPLE 23)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PS in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Example 23.

(EXAMPLE 24)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PS in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Example 24.

(COMPARATIVE EXAMPLE 17)

An electrolytic solution was prepared by dissolving 1 mol/L of lithium salt $LiPF_6$ as an electrolyte in a 20:40:40 (by volume) solvent mixture of EC, DMC, and EMC. The electrolytic solution was subjected to an LSV measurement on the reducing side using the LSV measurement cell; and the resulting data are indicated as Comparative Example 17.

(COMPARATIVE EXAMPLE 18)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution vinylene carbonate (VC) in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 18.

(COMPARATIVE EXAMPLE 19)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution VC in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 19.

(COMPARATIVE EXAMPLE 20)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution VC in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 20.

(COMPARATIVE EXAMPLE 21)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution propionic anhydride (PAH) in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 21.

(COMPARATIVE EXAMPLE 22)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PAH in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 22.

(COMPARATIVE EXAMPLE 23)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PAH in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 23.

(COMPARATIVE EXAMPLE 24)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution ethyl trifluoroacetate (ETFA) inanamount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 24.

(COMPARATIVE EXAMPLE 25)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution ETFA in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 25.

(COMPARATIVE EXAMPLE 26)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution ETFA in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 26.

(COMPARATIVE EXAMPLE 27)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution methyl acetoacetate (MAA) in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 27.

(COMPARATIVE EXAMPLE 28)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MAA in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 28.

(COMPARATIVE EXAMPLE 29)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MAA in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 29.

(COMPARATIVE EXAMPLE 30)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution acetylacetone (AcAc) in an amount of 0.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 30.

(COMPARATIVE EXAMPLE 31)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution AcAc in an amount of 4.8 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 31.

(COMPARATIVE EXAMPLE 32)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution AcAc in an amount of 20 percent by weight relative to the total weight of the solution composed of the solvent mixture and the electrolyte salt. The electrolytic solution was subjected to an LSV measurement on the reducing side using the LSV measurement cell; and the resulting data are indicated as Comparative Example 32.

Figs. 12 to 19 depict the resulting data of LSV measurements on the reducing side regarding the electrolytic solutions containing additives TMP, SL, PS, MFA, VC, PAH, ETFA, MAA, and AcAc, respectively, in amounts of 0 percent by weight, 0.8 percent by weight, 4.8 percent by weight, and 20 percent by weight, relative to the total weight of the solution composed of the solvent mixture and the electrolyte salt.

The LSV measurements data on the oxidizing side given in Figs. 2 to 10 and the LSV measurement data on the reducing side given in Figs. 11 to 19 demonstrate that the electrolytic solutions containing TMP, SL, PS, or MFA are electrolytic solutions which satisfy the conditions according to the present invention, i.e., each of these electrolytic solutions shows a reduction-reaction current of -0.05 $mA/cm^2$ (provided that a reaction current on the reducing side be negative) or less at a potential lower than 1. 0 V and shows an oxidation-reaction current of 0.5 $mA/cm^2$ (provided that a reaction current on the oxidizing side be positive) or more at a potential higher than 5.7 V, in the LSV measurement where the electrolytic solution contains the additive in an amount of from 0. 8 percent by weight to 20 percent by weight.

(2) Preparation of Spirally Wound Batteries

Fig. 20 is a schematic half sectional view of a spirally wound battery (electrode-rolled battery) as a lithium-ion secondary battery to which the present invention is adopted.

Initially, a cathodic material paste was prepared using $LiMn_{1/3}Ni_{1/3}CO_{1/3}O_2$ as a cathodic active material, a carbon black (CB1) and a graphite (GF1) both as conductive materials, a poly(vinylidene fluoride) (PVDF) as a binder, and NMP (N-methylpyrrolidone) as a solvent so as to give a ratio of dry solids content among $LiMn_{1/3}Ni_{1/3}Co_{1/3}O_2$:CB1:

GF1:PVDF of 86:9:2:3. The cathodic material paste was applied to an aluminum foil serving as a cathode current collector 10, dried at 80°C, pressed with a pressure roller, further dried at 120°C, and thereby formed a cathode layer 9 on the cathode current collector 10.

Next, an anodic material paste was prepared by using a hard carbon (pseudo-anisotropic carbon) having a $d_{002}$ of 0.387 nm as an anodic material, a carbon black (CB2) as a conductive material, PVDF as a binder, and NMP as a solvent so as to give a ratio of dry solids content among (pseudo-anisotropic carbon):CB1:PVDF of 88:5:7.

The above-prepared anodic material paste was applied to a copper foil as an anode current collector 8, dried at 80°C, pressed with a pressure roller, further dried at 120°C, and thereby formed an anode layer 7 on the anode current collector 8.

A separator 11 was placed between the above-prepared electrodes to form an assembly of electrodes, and the assembly was wound to form a roll of electrodes and was placed into a battery can 12. Next, the electrolytic solution according to Example 1 was injected into the battery can 12, followed by caulking, and thereby yielded a spirally wound battery.

(EXAMPLE 25)

An electrolytic solution was prepared by dissolving 1 mol/L of lithium salt $LiPF_6$ as an electrolyte in a 20:40:40 (by volume) solvent mixture of EC, DMC, and EMC to give a solution; and adding to the solution TMP in an amount of 0.8 percent by weight relative to the total weight of the solution composed of the solvent mixture and the electrolyte salt. Using this electrolytic solution, a spirally wound battery as Example 25 was prepared by the above procedure.

(EXAMPLE 26)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MFA in an amount of 0.8 percent by weight relative to the total weight of the solution composed of the solvent mixture and the electrolyte salt. Using this electrolytic solution, a spirally wound battery as Example 26 was prepared by the above procedure.

(EXAMPLE 27)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution SL in an amount of 0.8 percent by weight relative to the total weight of the solution composed of the solvent mixture and the electrolyte salt. Using this electrolytic solution, a spirally wound battery as Example 27 was prepared by the above procedure.

(EXAMPLE 28)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PS in an amount of 0.8 percent by weight relative to the total weight of the solution composed of the solvent mixture and the electrolyte salt. Using this electrolytic solution, a spirally wound battery as Example 28 was prepared by the above procedure.

(COMPARATIVE EXAMPLE 33)

An electrolytic solution was prepared by dissolving 1 mol/L of lithium salt $LiPF_6$ as an electrolyte in a 20: 40: 40 (by volume) solvent mixture of EC, DMC, and EMC. Using this electrolytic solution, a spirally wound battery as Comparative Example 33 was prepared by the above procedure.

(COMPARATIVE EXAMPLE 34)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution VC in an amount of 0.8 percent by weight relative to the total weight of the solution composed of the solvent mixture and the electrolyte salt. Using this electrolytic solution, a spirally wound battery as Comparative Example 34 was prepared by the above procedure.

(COMPARATIVE EXAMPLE 35)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution PAH in an amount of 0.8 percent by weight relative to the total weight of the solution composed of the solvent mixture and the electrolyte salt. Using this electrolytic solution, a spirally wound battery as Comparative Example 35 was prepared by the above procedure.

(COMPARATIVE EXAMPLE 36)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution ETFA in an amount of 0.8 percent by weight relative to the total weight of the solution composed of the solvent mixture and the electrolyte salt. Using this electrolytic solution, a spirally wound battery as Comparative Example 36 was prepared by the above procedure.

(COMPARATIVE EXAMPLE 37)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution MAA in an amount of 0.8 percent by weight relative to the total weight of the solution composed of the solvent mixture and the electrolyte salt. Using this electrolytic solution, a spirally wound battery as Comparative Example 37 was prepared by the above procedure.

(COMPARATIVE EXAMPLE 38)

An electrolytic solution was prepared by dissolving 1 mol/L of lithium salt $LiPF_6$ as an electrolyte in a 20: 40: 40 (by volume) solvent mixture of EC, DMC, and EMC to give a solution; and adding to the solution AcAc in an amount of 0.8 percent by weight relative to the total weight of the solution composed of the solvent mixture and the electrolyte salt. Using this electrolytic solution, a spirally wound battery as Comparative Example 38 was prepared by the above procedure.

Table 1 shows the ratios (DCR ratios) of the direct current resistance (DCR) of the spirally wound batteries according to Examples 25 to 28 and Comparative Examples 33 to 38 to the DCR of the spirally wound battery according to Comparative Example 33 containing no additive. The DCRs were measured in charging/discharging at temperatures of 25°C, 0°C, and -30°C, at a state of charge (SOC; charged capacity) of 50% (3.65 V), 1 second after the initiation of discharging. In Table 1, the DCR ratios are determined according to the following expression.

DCR Ratio = (DCR of any of Examples 25 to 28 and Comparative Examples 33 to 38)/(DCR of Comparative Example 33)

Table 1 also shows the LSV reaction starting voltages on the oxidizing side and on the reducing side of the spirally wound batteries according to Examples 25 to 28 and Comparative Examples 33 to 38, as determined from Figs. 2 to 19.

Table 1 demonstrates that the battery according to Comparative Example 33 including the electrolytic solution without additive showed a DCR lower than those of the batteries according to Examples 25 to 28 including the electrolytic solutions containing TMP, MFA, SL, and PS, respectively. This is probably because the additives TMP, MFA, SL, and PS, if added in an amount of up to 20 percent by weight, effectively help the batteries to have lower DCRs, as observed from the LSV measurement data on the oxidizing side and on the reducing side.

In addition, Examples 25 to 28 and Comparative Examples 34 to 38 were compared in consideration of the LSV measurement data on the reducing side given in Figs. 2 to 10 and on the LSV measurement data on the reducing side given in Figs. 11 to 19. The comparison demonstrates that only the electrolytic solutions containing TMP, SL, PS, or MFA help the batteries to have lower DCRs, each of which electric solutions satisfies the condition specified in the present invention, i.e., shows a reduction-reaction current of -0.05 $mA/cm^2$ (provided that a reaction current on the reducing side be negative) or less at a potential lower than 1. 0 V and shows an oxidation-reaction current of 0.5 $mA/cm^2$ (provided that a reaction current on the oxidizing side be positive) or more at a potential higher than 5.7 V.

[Table 1]

TABLE 1

| | Anodic active material | Electrolyte | Solvent | Additive | DCR ratio | | | LSV reaction starting voltage (V) | |
|---|---|---|---|---|---|---|---|---|---|
| | | | | | 25°C | 0°C | -10°C | Oxidizing side | Reducing side |
| Example 25 | Hard carbon | $LiPF_6$ 1.0 mol/L | EC: DMC: EMC (20:40: 40) vol. % | TMP 0.8 wt.% | 0.91 | 0.94 | 0.94 | 5.8 | 0.9 |
| Example 26 | Hard carbon | $LiPF_6$ 1.0 mol/L | EC: DMC: EMC (20:40: 40) vol. % | MFA 0.8 wt.% | 0.99 | 0.96 | 0.98 | 5.7 | 1.1 |
| Example 27 | Hard carbon | $LiPF_6$ 1.0 mol/L | EC: DMC: EMC (20:40: 40) vol. % | SL 0.8 wt.% | 0.95 | 0.99 | 0.99 | 5.8 | 0.9 |
| Example 28 | Hard carbon Hard carbon | $LiPF_6$ 1.0 mol/L | EC: DMC: EMC (20:40: 40) vol. % | PS 0.8wt.% | 0.99 | 0.99 | 0.97 | 5.8 | 1.1 |
| Comparative Example 33 | Hard carbon Hard carbon | $LiPF_6$ 1.0 mol/L | EC: DMC: EMC (20:40: 40) vol. % | - | 1.00 | 1.00 | 1.00 | 5.8 | 0.8 |
| Comparative Example 34 | Hard carbon Hard carbon | $LiPF_6$ 1.0 mol/L | EC: DMC: EMC (20:40: 40) vol. % | VC 0.8 wt.% | 1.17 | 1.24 | 1.28 | 4.9 | 0.8 |
| Comparative Example 35 | Hard carbon Hard carbon | $LiPF_6$ 1.0 mol/L | EC: DMC: EMC (20:40: 40) vol. % | PAH 0.8 wt.% | 1.20 | 1.45 | 1.48 | 5.7 | 1.4 |

(continued)

| | Anodic active material | Electrolyte | Solvent | Additive | DCR ratio | | | LSV reaction starting voltage (V) | |
|---|---|---|---|---|---|---|---|---|---|
| | | | | | 25°C | 0°C | -10°C | Oxidizing side | Reducing side |
| Comparative Example 36 | Hard carbon Hard carbon | $LiPF_6$ 1.0 mol/L | EC: DMC: EMC (20:40: 40) vol. % | ETFA 0.8 wt.% | 1.34 | 1.56 | 1.60 | 5.8 | 1.2 |
| Comparative Example 37 | Hard carbon Hard carbon | $LiPF_6$ 1.0 mol/L | EC: DMC: EMC (20:40: 40) vol. % | MAMA 0.8 wt.% | 1.28 | 1.50 | 1.45 | 4.7 | 1.6 |
| Comparative Example 38 | Hard carbon Hard carbon | $LiPF_6$ 1.0 mol/L | EC: DMC: EMC (20:40: 40) vol. % | AcAc 0.8 wt.% | 1.90 | 2.16 | 2.17 | | 4.6 1.5 |

(COMPARATIVE EXAMPLE 39)

An electrolytic solution was prepared by dissolving 1 mol/L of lithium salt $LiPF_6$ as an electrolyte in a 19:5:38: 38 (by volume) solvent mixture of EC, GBL (y-butyllactone), DMC, and EMC to give a solution; and adding to the solution TMP in an amount of 0.8 percent by weight relative to the total weight of the solution composed of the solvent mixture and the electrolyte salt. Usingthiselectrolyticsolution,aspirally wound battery as Comparative Example 39 was prepared by the above procedure.

(COMPARATIVE EXAMPLE 40)

An electrolytic solution was prepared by dissolving 1 mol/L of lithium salt $LiPF_6$ as an electrolyte in a 18:10:36: 36 (by volume) solvent mixture of EC, GBL, DMC, and EMC to give a solution; and adding to the solution TMP in an amount of 0.8 percent by weight relative to the total weight of the solution composed of the solvent mixture and the electrolyte salt. Using this electrolytic solution, a spirally wound battery as Comparative Example 40 was prepared by the above procedure.

(COMPARATIVE EXAMPLE 41)

An electrolytic solution was prepared by dissolving 1 mol/L of lithium salt $LiPF_6$ as an electrolyte in a 17:15:34: 34 (by volume) solvent mixture of EC, GBL, DMC, and EMC to give a solution; and adding to the solution TMP in an amount of 0.8 percent by weight relative to the total weight of the solution composed of the solvent mixture and the electrolyte salt. Using this electrolytic solution, a spirally wound battery as Comparative Example 41 was prepared by the above procedure.

(COMPARATIVE EXAMPLE 42)

An electrolytic solution was prepared by dissolving 1 mol/L of lithium salt $LiPF_6$ as an electrolyte in a 20: 40: 40 (by volume) solvent mixture of GBL, DMC, and EMC to give a solution; and adding to the solution TMP in an amount of 0.8 percent by weight relative to the total weight of the solution composed of the solvent mixture and the electrolyte salt. Using this electrolytic solution, a spirally wound battery as Comparative Example 42 was prepared by the above procedure.

(COMPARATIVE EXAMPLE 43)

An electrolytic solution was prepared by dissolving 1 mol/L of lithium salt $LiPF_6$ as an electrolyte in a 20 : 40 : 40 (by volume) solvent mixture of EC, GBL, and EMC to give a solution; and adding to the solution TMP in an amount of 0.8 percent by weight relative to the total weight of the solution composed of the solvent mixture and the electrolyte salt. Using this electrolytic solution, a spirally wound battery as Comparative Example 43 was prepared by the above procedure.

(COMPARATIVE EXAMPLE 44)

An electrolytic solution was prepared by dissolving 1 mol/L of lithium salt $LiPF_6$ as an electrolyte in a 20 : 40 : 40 (by volume) solvent mixture of EC, DMC, and GBL to give a solution; and adding to the solution TMP in an amount of 0.8 percent by weight relative to the total weight of the solution composed of the solvent mixture and the electrolyte salt. Using this electrolytic solution, a spirally wound battery as Comparative Example 44 was prepared by the above procedure.

Table 2 shows the ratios (DCR ratios) of the direct current resistances (DCRs) of the spirally wound batteries according to Comparative Examples 39 to 44 to the DCR of the spirally wound battery according to Comparative Example 33 containing no additive. The DCRs were measured in charging/discharging at temperatures of 25°C, 0°C, and -30°C, at a SOC of 50% (3.65 V), 1 second after initiation of discharging. In Table 2, the DCR ratios are determined according to the following expression:

DCR Ratio = (DCR of any of Comparative Examples 39 to 44)/(DCR of Comparative Example 33)

Comparisons between Example 25 and Comparative Examples 39 to 41 demonstrate that GBL, if added, causes the battery to have a higher DCR. Comparisons between Example 25 and Comparative Examples 42 to 44 demonstrate that GBL, if used as replacing one of the ternary solvent system composed of EC, DMC, and EMC, causes the battery to have a higher DCR.

These demonstrate that the advantageous effects of the present invention are not obtained when another solvent is added to the ternary solvent system composed of EC, DMC, and EMC and when one of the three components is replaced with another solvent.

[Table 2]

TABLE 2

| | Anodic active material | Electrolyte | Solvent | Additive | DCR ratio | | |
|---|---|---|---|---|---|---|---|
| | | | | | 25°C | 0°C | -10°C |
| Comparative Example 39 | Hard carbon | $LiPF_6$ 1,0 mol/L | EC:GBL:DMC: EMC (19:5:38:38) vol.% | TMP 0.8 wt.% | 1.18 | 1.22 | 1.30 |
| Comparative Example 40 | Hard carbon | $LiPF_6$ 1.0 mol/L | EC:GBL:DMC: EMC (18:10:36:36) vol.% | TMP 0.8 wt.% | 1.32 | 1.42 | 1.51 |
| Comparative Example 41 | Hard carbon | $LiPF_6$ 1.0 mol/L | EC:GBL:DMC: EMC (17:15:34:34) vol.% | TMP 0.8 wt.% | 1.44 | 1.60 | 1.82 |
| Comparative Example 42 | Hard carbon | $LiPF_6$ 1.0 mol/L | GBL:DMC:EMC (20:40:40) vol.% | TMP 0.8 wt.% | 1.52 | 1.81 | 2.03 |

(continued)

| | Anodic active material | Electrolyte | Solvent | Additive | DCR ratio | | |
|---|---|---|---|---|---|---|---|
| | | | | | 25°C | 0°C | -10°C |
| Comparative Example 43 | Hard carbon | $LiPF_6$ 1.0 mol/L | EC:GBL:EMC (20:40:40) vol.% | TMP 0.8 wt.% | 1.21 | 1.31 | 1.36 |
| Comparative Example 44 | Hard carbon | $LiPF_6$ 1.0 mol/L | EC:DMC:GBL (20:40:40) vol.% | TMP 0.8 wt.% | 1.33 | 1.42 | 1.80 |

(COMPARATIVE EXAMPLE 45)

A spirally wound battery was prepared as Comparative Example 45 by the procedure of Example 25, except for using a soft carbon having a $d_{002}$ of 0.345 nm as the anodic material.

Table 3 shows the ratios (DCR ratios) of the direct current resistances (DCRs) of the spirally wound battery according to Comparative Example 45 to the DCR of the spirally wound battery according to Comparative Example 33 containing no additive. The DCRs were measured in charging/discharging at temperatures of 25°C, 0°C, and -30°C, at a state of charge of 50% (3.65 V), 1 second after initiation of discharging. In Table 3, the DCR ratios are determined according to the following expression.

DCR Ratio = (DCR of Comparative Example 45)/(DCR of Comparative Example 33)

Comparisons between Example 25 and Comparative Example 45 demonstrate that the advantageous effects of the present invention are not obtained if the anode employs a carbonaceous material having a crystal plasticity dissimilar to that specified in the present invention, namely, if the anode employs a carbonaceous material not having a $d_{002}$ in the range of 0.38 nm or more and 0.40 nm or less.

[Table 3]

TABLE 3

| | Anodic active material | Electrolyte | Solvent | Additive | DCR ratio | | |
|---|---|---|---|---|---|---|---|
| | | | | | 25°C | 0°C | -10°C |
| Comparative Example 45 | Soft carbon | $LiPF_6$ 1.0 mol/L | EC:DMC:EMC (20:40:40) vol.% | TMP 0.8 wt.% | 1.02 | 1.09 | 1.02 |

The additives for use in the present invention are present as being mixed with the solvent in the electrolytic solution, and thereby the amounts of solvent(s) and additive(s) can be easily known by an analysis technique for specifying the composition of the electrolytic solution, such as nuclear magnetic resonance spectrometry (NMR).

The above results demonstrate that the lithium-ion secondary batteries according to the present invention have improved DCRs and show longer lives as compared to customary lithium-ion secondary batteries; and that the batteries have a higher battery output per one battery, thereby reduce the number of batteries necessary for a battery pack (module), and give battery modules with smaller sizes and smaller weights.

The lithium-ion secondary batteries according to the present invention can be adopted to all instruments requiring a high-capacity electricity and exhibit most satisfactory power when used typically in HEVs requiring high outputs.

(EXAMPLE 29)

A spirally wound battery as illustrated in Fig. 20 was prepared in the following manner. Initially, a cathodic material paste (mix) was prepared by using $LiMn_{1/3}Ni_{1/3}CO_{1/3}O_2$ as a cathodic active material, a carbon black (CB1)

and a graphite (GF1) both as conductive materials, a poly (vinylidene fluoride) (PVDF) as a binder, and N-methylpyrrolidone (NMP) as a solvent so as to give a dry solids content ratio (by weight) among $Limn_{1/3}Ni_{1/3}Co_{1/3}O_{21}$CBl:GF1:PVDF of 86:9:2:3. The cathodic material paste was applied to an aluminum foil as a cathode collector foil 10, dried at 80°C, pressed with a pressure roller, further dried at 120°C, and thereby formed a cathode mix layer 9 on the cathode collector foil 10.

Next, an anodic material paste (mix) was prepared by using a hard carbon (pseudo-anisotropic carbon) having a $d_{002}$ of 0.387 nm as an anodic material, a carbon black (CB2) as a conductive material, PVDF as a binder, and NMP as a solvent so as to give a dry solid contents ratio (by weight) among pseudo-anisotropic carbon:CB1:PVDF of 88:5:7.

The above-prepared anodic material paste was applied to a copper foil as an anode current collector 8, dried at 80°C, pressed with a pressure roller, further dried at 120°C, and thereby formed an anode layer 7 on the anode collector foil 8.

A separator 11 was placed between the above-prepared electrodes to form an assembly of electrodes, and the assembly was wound to form a roll of electrodes and was placed into a battery can 12. Next, an electrolytic solution was injected into the battery can 12, followed by caulking, and thereby yielded a spirally wound battery. The electrolytic solution was prepared by dissolving 1 mol/l of lithium salt $LiPF_6$ in a 20:40:40 (by volume) solvent mixture of EC, DMC, and EMC to give a solution; and adding to the solution tris(2,2,2-trifluoroethyl) phosphite (TTFP) in an amount of 0. 8 percent by weight relative to the total weight of the solution composed of the solvent mixture and the electrolyte salt.

(COMPARATIVE EXAMPLE 46)

A battery was prepared by the procedure and under conditions of Example 29, except for not using any additive.

(COMPARATIVE EXAMPLE 47)

A battery as a comparative example to Example 29 was prepared by the procedure and under conditions of Example 1, except for adding, as the additive, 0.8 percent by weight of vinylene carbonate (VC).

Table 4 shows the contents (μg/l) of hydrogen fluoride (HF) in the electrolytic solutions according to Example 29, Comparative Example 46, and Comparative Example 47, after storage at an ambient temperature of 70°C for 14 days.

Table 4 demonstrates that the electrolytic solution according to Example 29 containing TTFP less suffers from increase in HF amount after storage, as compared to the electrolytic solutions according to Comparative Examples 1 and 2 containing no TTFP, indicating that TTFP suppresses the formation reaction of HF. This demonstrates that an electrolytic solution, even if stored at high ambient temperatures for a long time, is protected by the addition of TTFP from increase in HF formation. Hydrogen fluoride (HF) is formed because $PF_5$, which has been formed by dissociation of $LiPF_6$, reacts with moisture in the battery. Though it is difficult to remove moisture completely from the battery during its manufacturing process, TTFP traps $PF_5$ formed by dissociation of $LiPF_6$ and thereby suppresses the formation of HF even when some moisture remains in the battery. The resulting lithium-ion secondary battery can have satisfactory high-temperature characteristics, because of less suffering from the HF formation is suppressed and thereby a deterioration reaction at high temperatures is suppressed.

[Table 4]

TABLE 4

| | Additive | Content of additive (wt.%) | Composition of electrolytic solution | | | | HF amount (μg/L) |
|---|---|---|---|---|---|---|---|
| | | | $LiPF_6$ (mol/L) | EC (vol.%) | DMC (vol.%) | EMC (vol.%) | |
| Example 1 | TTFP | 0.8 | 1 | 20 | 40 | 40 | 450 |
| Com. Ex.1 | none | 0 | 1 | 20 | 40 | 40 | 790 |
| Com. Ex. 2 | VC | 0.8 | 1 | 20 | 40 | 40 | 720 |

Industrial Applicability

The present invention is adopted particularly to lithium-ion batteries typically for use in electric vehicles, in which high outputs are required.

Reference Signs List

1 vessel

2 lid

3 glassy carbon electrode

4 platinum electrode

5 lithium electrode

6 electrolytic solution

7 anodic active material mix

8 anode collector foil

9 cathodic active material mix

10 cathode collector foil

11 separator

12 battery can

13 cathode collector lead

14 anode collector lead

15 battery cap

16 safety vent

17 positive terminal

18 gasket

19 electrolytic solution.

## Claims

**1.** A lithium-ion secondary battery,
wherein the battery comprises an anodic active material mix containing a carbonaceous material having an average interlayer distance between the (002) planes of from 0.38 to 0.4 nm as determined through X-ray diffractometry,
wherein the battery comprises an electrolytic solution including a solvent, an additive, and an electrolyte,
wherein the solvent contains a cyclic carbonate and a chain carbonate in a total content of more than 95 percent by volume based on the total volume of the solvent, the cyclic carbonate being represented by (Formula 1):

[Chem. 1]

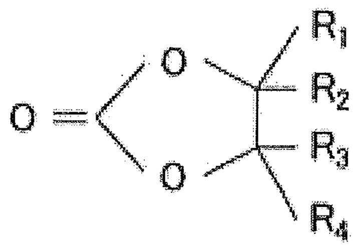

(Formula 1)

wherein $R_1$, $R_2$, $R_3$, and $R_4$ each independently represent one selected from the group consisting of hydrogen, an alkyl group having 1 to 3 carbon atoms, hydrogen, and a halogenated alkyl group having 1 to 3 carbon atoms, and the chain carbonate being represented by (Formula 2):

[Chem. 2]

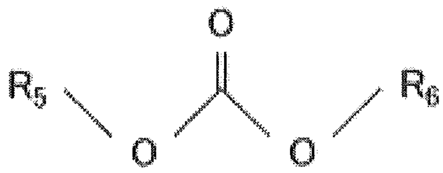

(Formula 2)

wherein $R_5$ and $R_6$ each independently represent one selected from the group consisting of an alkyl group having 1 to 3 carbon atoms and a halogenated alkyl group having 1 to 3 carbon atoms,
wherein the additive is a substance having a lowest unoccupied molecular orbital (LUMO) energy determined through molecular orbital calculation of lower than the LUMO energy of ethylene carbonate determined through molecular orbital calculation and having a highest occupied molecular orbital (HOMO) energy of lower than the HOMO energy of vinylene carbonate determined through molecular orbital calculation, and
wherein the electrolytic solution including the solvent, the additive, and the electrolyte shows a reduction-reaction current of -0.05 mA/cm$^2$ (provided that a reaction current on the reducing side be negative) or less at a potential lower than 1 V and shows an oxidation-reaction current of 0.5 mA/cm$^2$ (provided that a reaction current on the oxidizing side be positive) or more at a potential higher than 5.7 V in a linear sweep voltammetry (LSV) measurement at a potential sweep rate of 1 mV/s using a glassy-carbon disk electrode as a working electrode, a platinum electrode as a counter electrode, and a lithium electrode as a reference electrode.

**2.** The lithium-ion secondary battery according to claim 1, wherein the electrolyte comprises one of $LiBF_4$ and $LiPF_6$.

**3.** The lithium-ion secondary battery according to claim 1, wherein the additive comprises one or more substances selected from the group consisting of phosphotriester derivatives, phosphorus compounds, cyclic sulfone derivatives, cyclic sultone derivatives, and chain ester derivatives.

**4.** The lithium-ion secondary battery according to claim 3, wherein the additive is a phosphotriester derivative represented by (Formula 3):

[Chem. 3]

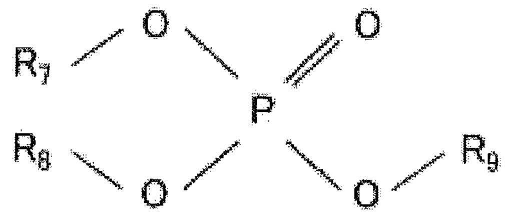

(Formula 3)

wherein $R_7$, $R_8$, and $R_9$ each independently represent one selected from the group consisting of hydrogen, an alkyl group having 1 to 3 carbon atoms, a halogenated alkyl group having 1 to 3 carbon atoms, and a halogen.

**5.** The lithium-ion secondary battery according to claim 3, wherein the additive is a phosphorus compound represented by (Formula 4):

[Chem. 4]

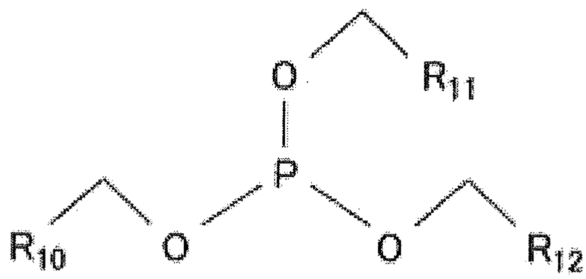

(Formula 4)

wherein $R_{10}$, $R_{11}$, and $R_{12}$ each independently represent one selected from the group consisting of hydrogen, an alkyl group having 1 to 3 carbon atoms, a halogenated alkyl group having 1 to 3 carbon atoms, and a halogen.

**6.** The lithium-ion secondary battery according to claim 3, wherein the additive is a cyclic sulfone derivative represented by (Formula 5):

[Chem. 5]

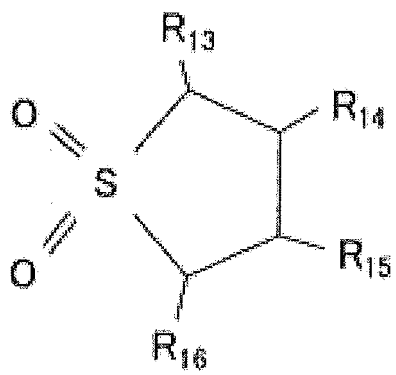

(Formula 5)

wherein $R_{13}$, $R_{14}$, $R_{15}$, and $R_{16}$ each independently represent one selected from the group consisting of hydrogen, an alkyl group having 1 to 3 carbon atoms, a halogenated alkyl group having 1 to 3 carbon atoms, and a halogen.

**7.** The lithium-ion secondary battery according to claim 3, wherein the additive is a cyclic sultone derivative represented by (Formula 6):

[Chem. 6]

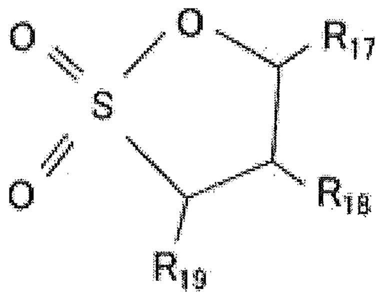

(Formula 6)

wherein $R_{17}$, $R_{18}$, and $R_{19}$ each independently represent one selected from the group consisting of hydrogen, an alkyl group having 1 to 3 carbon atoms, and a halogen each having 1 to 3 carbon atoms.

**8.** The lithium-ion secondary battery according to claim 3, wherein the additive is a chain ester derivative represented by (Formula 7):

[Chem. 7]

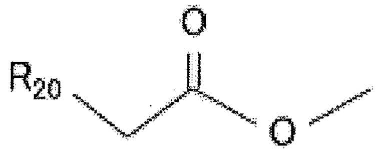

(Formula 7)

wherein $R_{20}$ represents one selected from the group consisting of an alkyl group having 1 to 3 carbon atoms, a halogenated alkyl group, a vinyl group, and a halogen.

**9.** The lithium-ion secondary battery according to claim 1, wherein the solvent contains the cyclic carbonate represented by (Formula 1) in a content of from 18 percent by volume to 30 percent by volume and the chain carbonate represented by (Formula 2) in a content of from 70 percent by volume to 82 percent by volume based on the total volume of the solvent.

**10.** The lithium-ion secondary battery according to claim 1, wherein the total amount of the additive is more than 0 percent by weight and 20 percent by weight or less relative to the total weight of a solution composed of the solvent and the electrolyte.

**11.** The lithium-ion secondary battery according to claim 1, wherein the electrolytic solution contains the electrolyte in a concentration of from 0.5 mol/L to 2 mol/L relative to the total amount of the solvent and the additive.

**12.** The lithium-ion secondary battery according to claim 1, wherein the electrolytic solution including the solvent, the additive, and the electrolyte has a direct-current resistance (DCR) of 0.5 or more and less than 1, provided that the direct-current resistance (DCR) of an electrolytic solution corresponding to the electrolytic solution, except for not containing the additive, be 1.

**13.** The lithium-ion secondary battery according to claim 1, wherein the battery comprises the cathode including a lithium transition metal oxide represented by the formula: $LiMn_xMlyM2_zO_2$, wherein M1 represents at least one element selected from Co and Ni; M2 represents at least one element selected from the group consisting of Co, Ni, Al, B, Fe, Mg, and Cr; and x, y, and z satisfy the following conditions: $x+y+z=1$, $0.2 \leq x \leq 0.6$, $0.2 \leq y \leq 0.6$, and $0.05 \leq z \leq 0.4$.

**14.** The lithium-ion secondary battery according to claim 1, wherein the cyclic carbonate comprises at least one of ethylene carbonate and propylene carbonate, and wherein the chain carbonate comprises at least one of dimethyl carbonate and ethyl methyl carbonate.

**15.** The lithium-ion secondary battery according to claim 1, wherein the cyclic carbonate is ethylene carbonate, and wherein the chain carbonate is dimethyl carbonate or ethyl methyl carbonate.

**16.** The lithium-ion secondary battery according to claim 10 or 11, wherein the solvent has a volume ratio of dimethyl carbonate to ethyl methyl carbonate of from 1 to 1.4.

**17.** The lithium-ion secondary battery according to claim 1, wherein the battery has a ratio of the total weight of the additive to the weight of the carbonaceous material of from 1 to 3.

**18.** The lithium-ion secondary battery according to claim 3, wherein the additive is trimethyl phosphate (TMP).

**19.** The lithium-ion secondary battery according to claim 3, wherein the additive is sulfolane (SL).

**20.** The lithium-ion secondary battery according to claim 3, wherein the additive is propane sultone (PS).

**21.** The lithium-ion secondary battery according to claim 3, wherein the additive is methyl fluoroacetate (MFA).

**22.** The lithium-ion secondary battery according to claim 3, wherein the additive represented by (Formula 4) is at least one selected from the group consisting of tris(2,2,2-trifluoroethyl) phosphite, tris(2,2,2-difluoroethyl) phosphite, tris (2,2,2-fluoroethyl) phosphite, tris(2-fluoroethyl-2-difluoroethyl-2-trifluoroethyl) phosphite, and ethyl phosphite.

**23.** The lithium-ion secondary battery according to claim 22, wherein the electrolyte comprises a lithium salt represented by lithium hexafluorophosphate ($LiPF_6$).

**24.** A lithium-ion secondary battery, wherein the battery comprises an electrolytic solution including a solvent, an additive, and an electrolyte, and wherein the additive is a phosphorus compound represented by (Formula 4):

[Chem. 8]

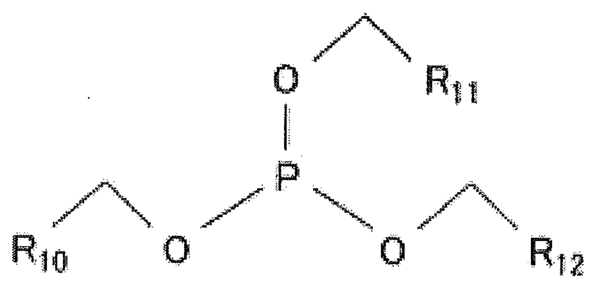

(Formula 4)

wherein $R_{10}$, $R_{11}$, and $R_{12}$ each independently represent one selected from the group consisting of hydrogen, an alkyl group having 1 to 3 carbon atoms, fluorine, and fluorinated alkyl group each having 1 to 3 carbon atoms.

FIG. 1

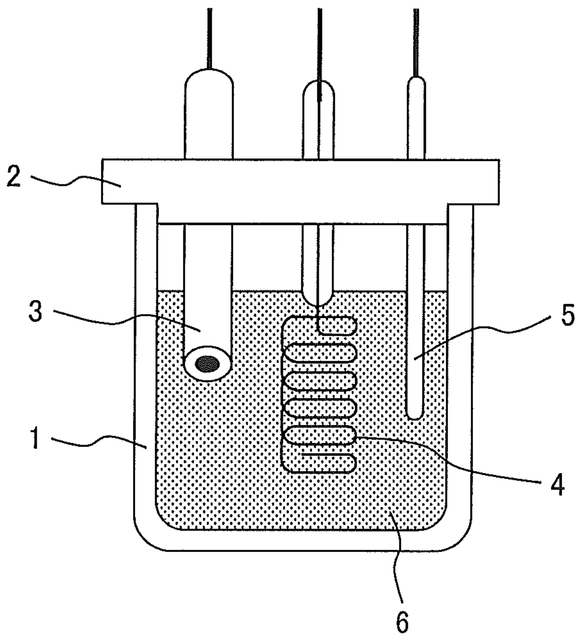

FIG. 2

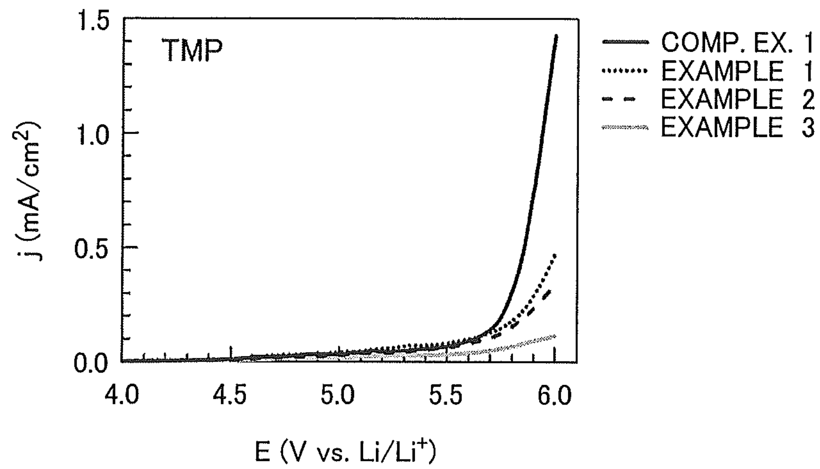
TMP
1.5
1.0
0.5
0.0
j (mA/cm²)
4.0
4.5
5.0
5.5
6.0
E (V vs. Li/Li⁺)
COMP. EX. 1
EXAMPLE 1
EXAMPLE 2
EXAMPLE 3

FIG. 3

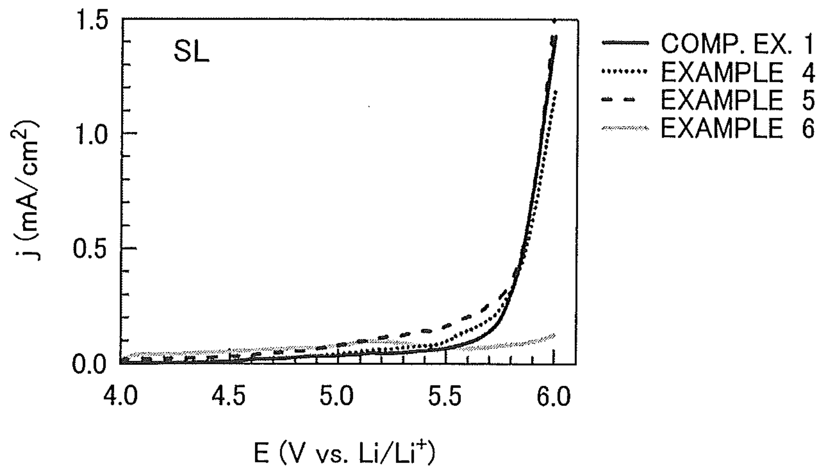
SL
1.5
1.0
0.5
0.0
j (mA/cm²)
4.0
4.5
5.0
5.5
6.0
E (V vs. Li/Li⁺)
COMP. EX. 1
EXAMPLE 4
EXAMPLE 5
EXAMPLE 6

FIG. 4

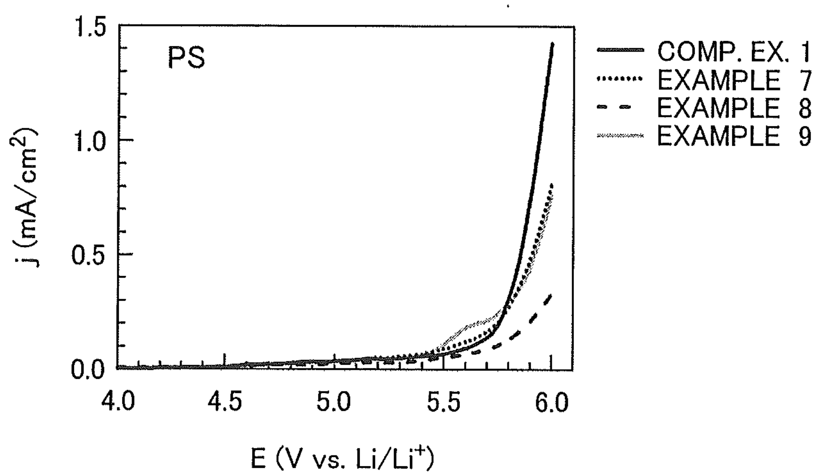
PS
1.5
1.0
0.5
0.0
j (mA/cm²)
4.0
4.5
5.0
5.5
6.0
E (V vs. Li/Li⁺)
COMP. EX. 1
EXAMPLE 7
EXAMPLE 8
EXAMPLE 9

FIG. 5

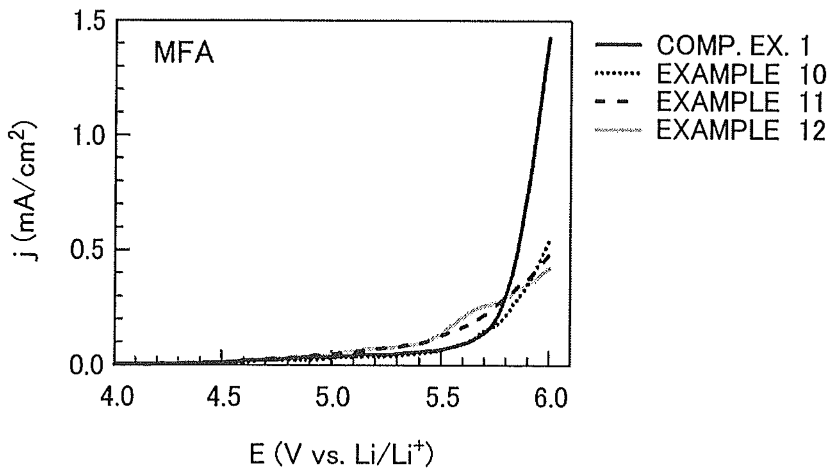
MFA
1.5
1.0
0.5
0.0
j (mA/cm²)
4.0
4.5
5.0
5.5
6.0
E (V vs. Li/Li⁺)
COMP. EX. 1
EXAMPLE 10
EXAMPLE 11
EXAMPLE 12

FIG. 6

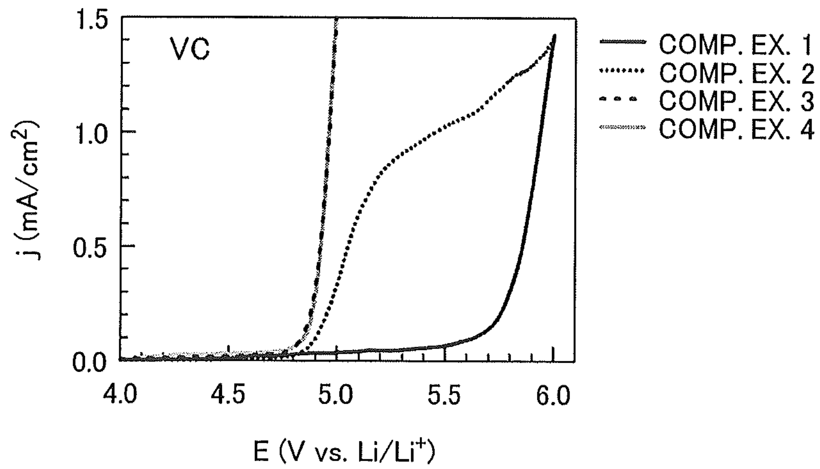
VC
1.5
1.0
0.5
0.0
4.0
4.5
5.0
5.5
6.0
j (mA/cm²)
E (V vs. Li/Li⁺)
COMP. EX. 1
COMP. EX. 2
COMP. EX. 3
COMP. EX. 4

FIG. 7

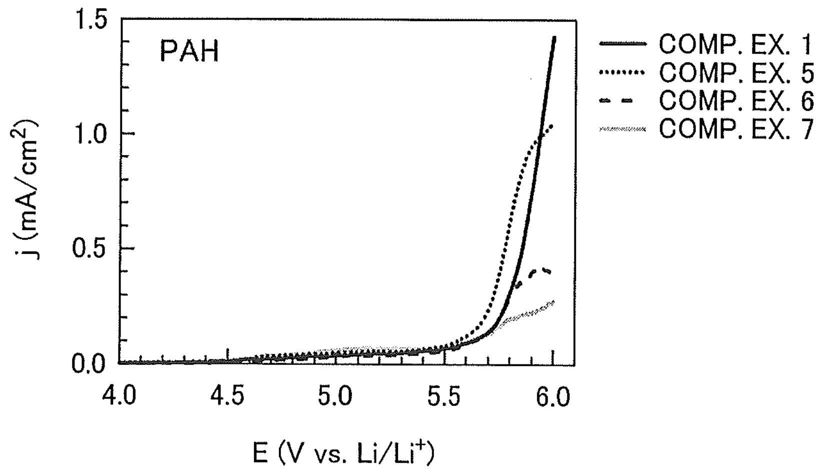
PAH
1.5
1.0
0.5
0.0
4.0
4.5
5.0
5.5
6.0
j (mA/cm²)
E (V vs. Li/Li⁺)
COMP. EX. 1
COMP. EX. 5
COMP. EX. 6
COMP. EX. 7

FIG. 8

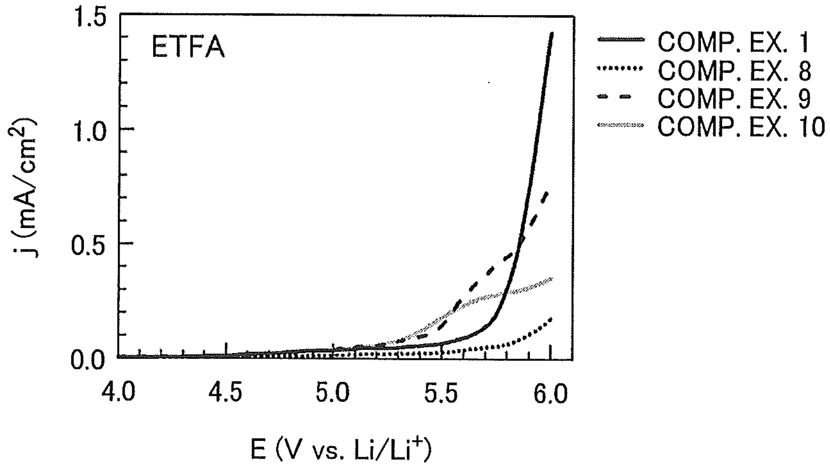
ETFA
1.5
1.0
0.5
0.0
j (mA/cm$^2$)
4.0
4.5
5.0
5.5
6.0
E (V vs. Li/Li$^+$)
COMP. EX. 1
COMP. EX. 8
COMP. EX. 9
COMP. EX. 10

FIG. 9

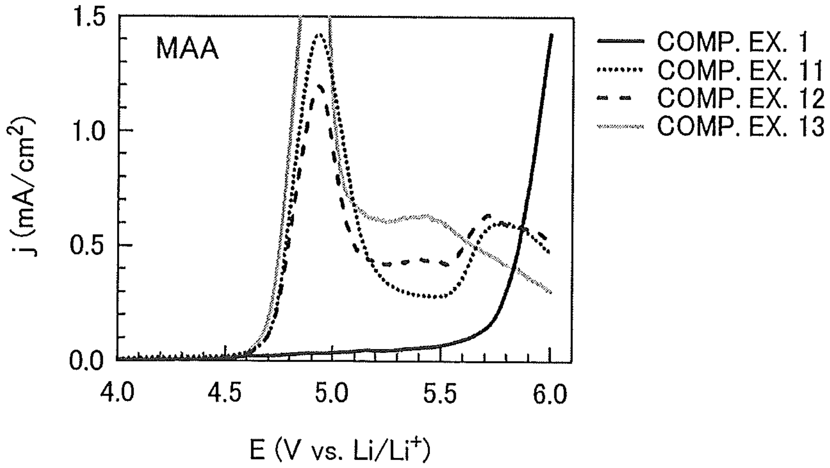
MAA
1.5
1.0
0.5
0.0
j (mA/cm$^2$)
4.0
4.5
5.0
5.5
6.0
E (V vs. Li/Li$^+$)
COMP. EX. 1
COMP. EX. 11
COMP. EX. 12
COMP. EX. 13

# FIG. 10

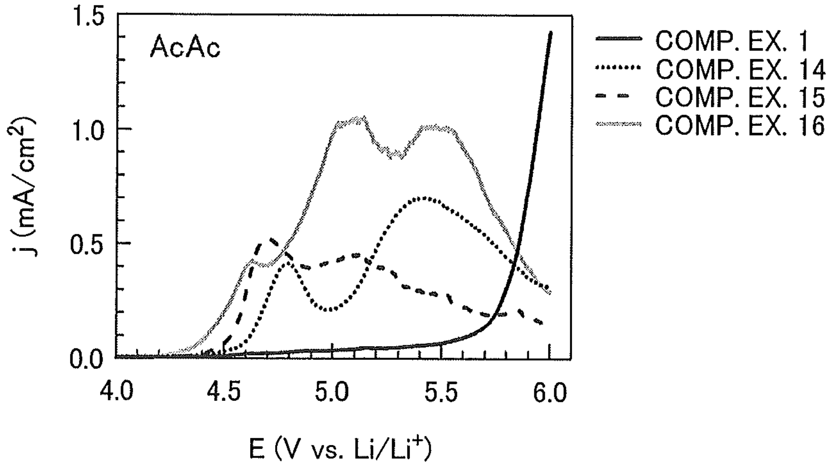
AcAc
j (mA/cm²)
1.5
1.0
0.5
0.0
4.0
4.5
5.0
5.5
6.0
E (V vs. Li/Li⁺)
COMP. EX. 1
COMP. EX. 14
COMP. EX. 15
COMP. EX. 16

# FIG. 11

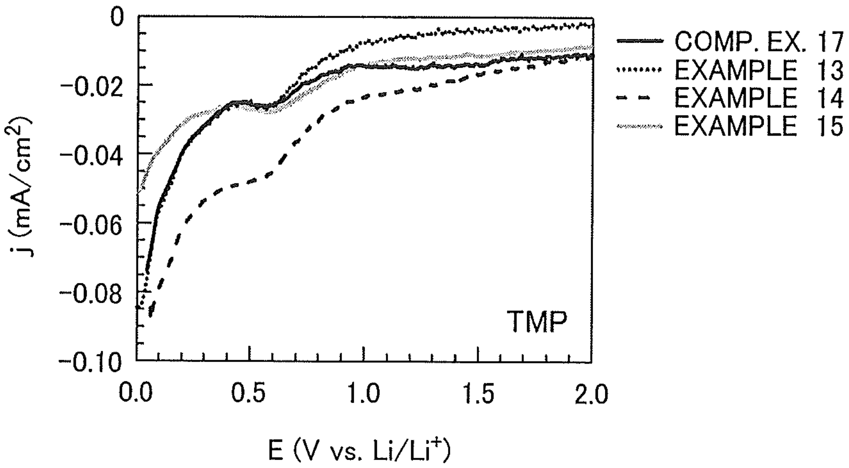
TMP
j (mA/cm²)
0
−0.02
−0.04
−0.06
−0.08
−0.10
0.0
0.5
1.0
1.5
2.0
E (V vs. Li/Li⁺)
COMP. EX. 17
EXAMPLE 13
EXAMPLE 14
EXAMPLE 15

FIG. 12

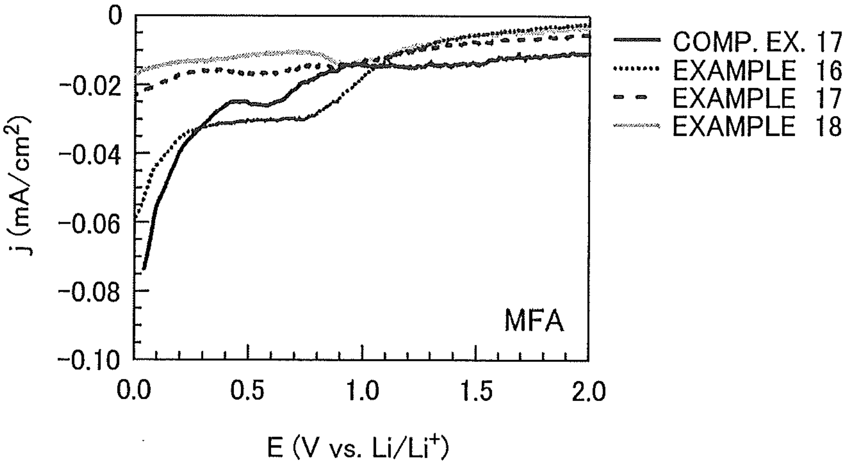
0
-0.02
-0.04
-0.06
-0.08
-0.10
j (mA/cm²)
0.0
0.5
1.0
1.5
2.0
E (V vs. Li/Li+)
MFA
COMP. EX. 17
EXAMPLE 16
EXAMPLE 17
EXAMPLE 18

FIG. 13

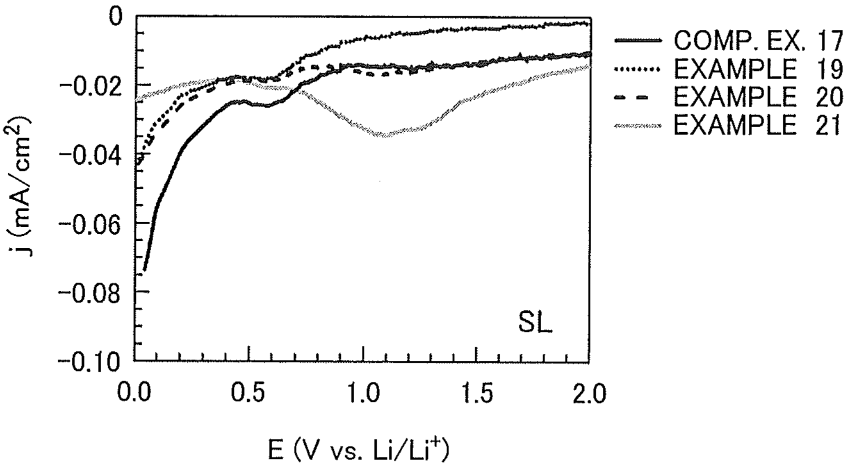
0
-0.02
-0.04
-0.06
-0.08
-0.10
j (mA/cm²)
0.0
0.5
1.0
1.5
2.0
E (V vs. Li/Li+)
SL
COMP. EX. 17
EXAMPLE 19
EXAMPLE 20
EXAMPLE 21

FIG. 14

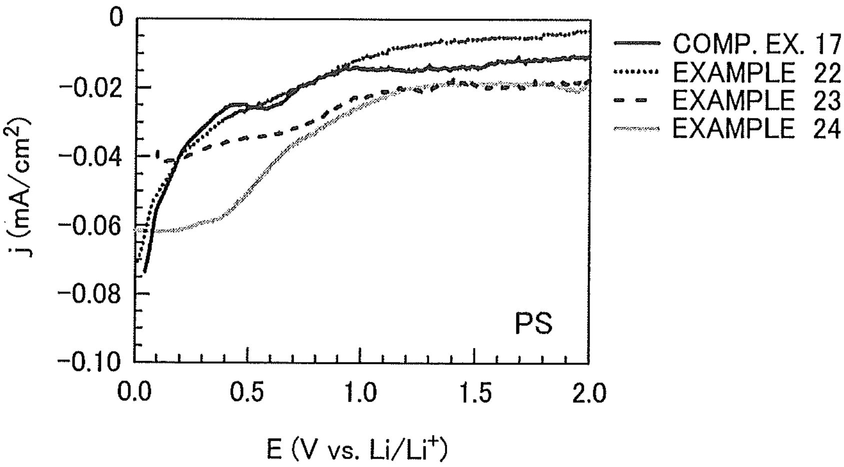
0
−0.02
−0.04
−0.06
−0.08
−0.10
j (mA/cm²)
0.0
0.5
1.0
1.5
2.0
E (V vs. Li/Li+)
PS
COMP. EX. 17
EXAMPLE 22
EXAMPLE 23
EXAMPLE 24

FIG. 15

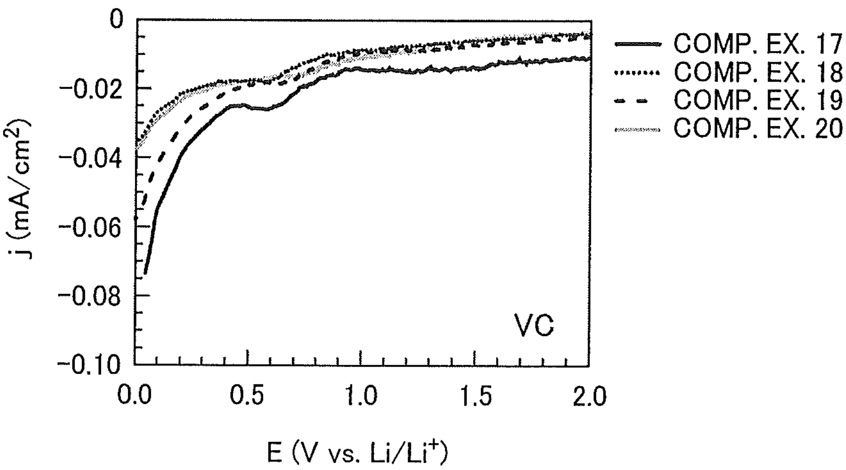
0
−0.02
−0.04
−0.06
−0.08
−0.10
j (mA/cm²)
0.0
0.5
1.0
1.5
2.0
E (V vs. Li/Li+)
VC
COMP. EX. 17
COMP. EX. 18
COMP. EX. 19
COMP. EX. 20

# FIG. 16

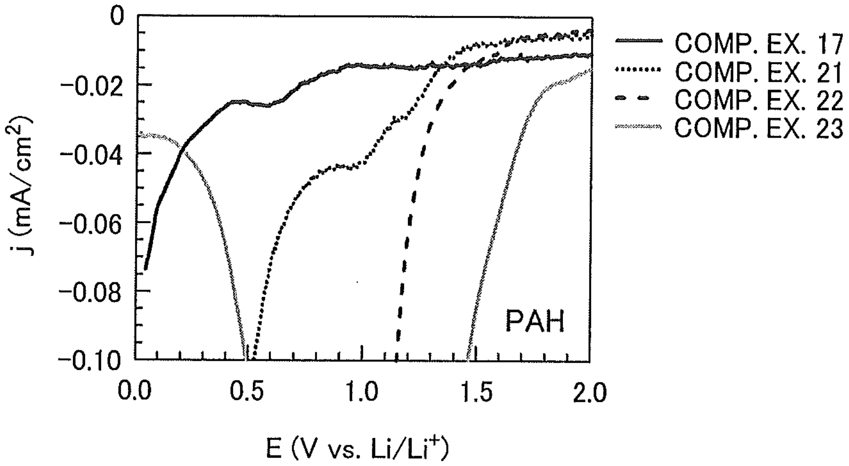
0
−0.02
−0.04
−0.06
−0.08
−0.10
j (mA/cm$^2$)
0.0
0.5
1.0
1.5
2.0
E (V vs. Li/Li$^+$)
PAH
COMP. EX. 17
COMP. EX. 21
COMP. EX. 22
COMP. EX. 23

# FIG. 17

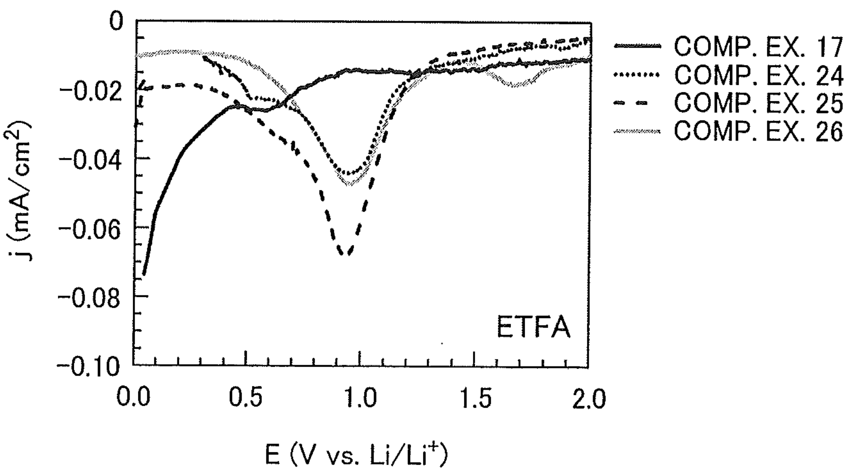
0
−0.02
−0.04
−0.06
−0.08
−0.10
j (mA/cm$^2$)
0.0
0.5
1.0
1.5
2.0
E (V vs. Li/Li$^+$)
ETFA
COMP. EX. 17
COMP. EX. 24
COMP. EX. 25
COMP. EX. 26

# FIG. 18

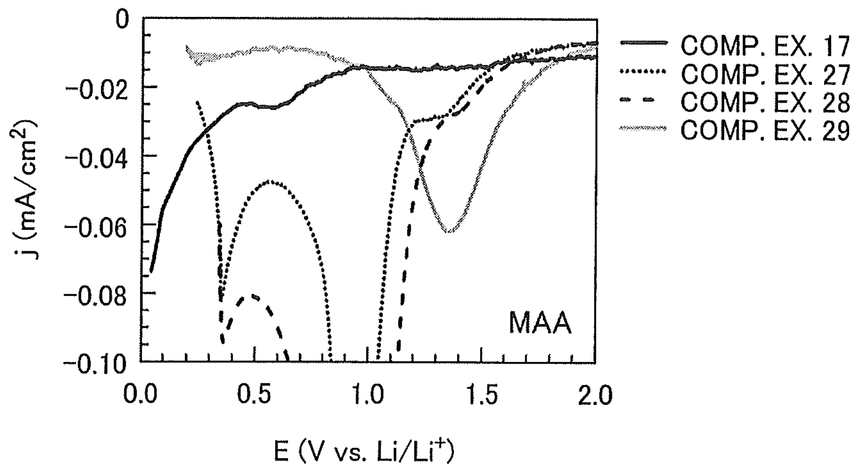
0
−0.02
−0.04
−0.06
−0.08
−0.10
j (mA/cm$^2$)
0.0
0.5
1.0
1.5
2.0
E (V vs. Li/Li$^+$)
MAA
COMP. EX. 17
COMP. EX. 27
COMP. EX. 28
COMP. EX. 29

# FIG. 19

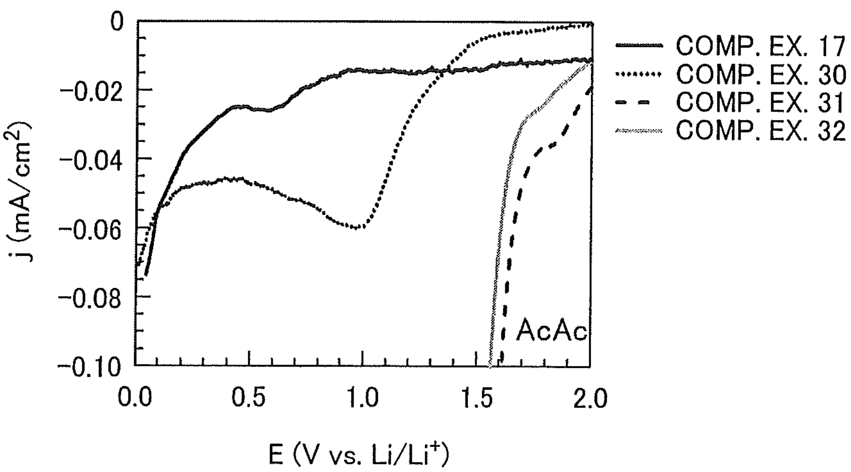
0
−0.02
−0.04
−0.06
−0.08
−0.10
j (mA/cm$^2$)
0.0
0.5
1.0
1.5
2.0
E (V vs. Li/Li$^+$)
AcAc
COMP. EX. 17
COMP. EX. 30
COMP. EX. 31
COMP. EX. 32

FIG. 20

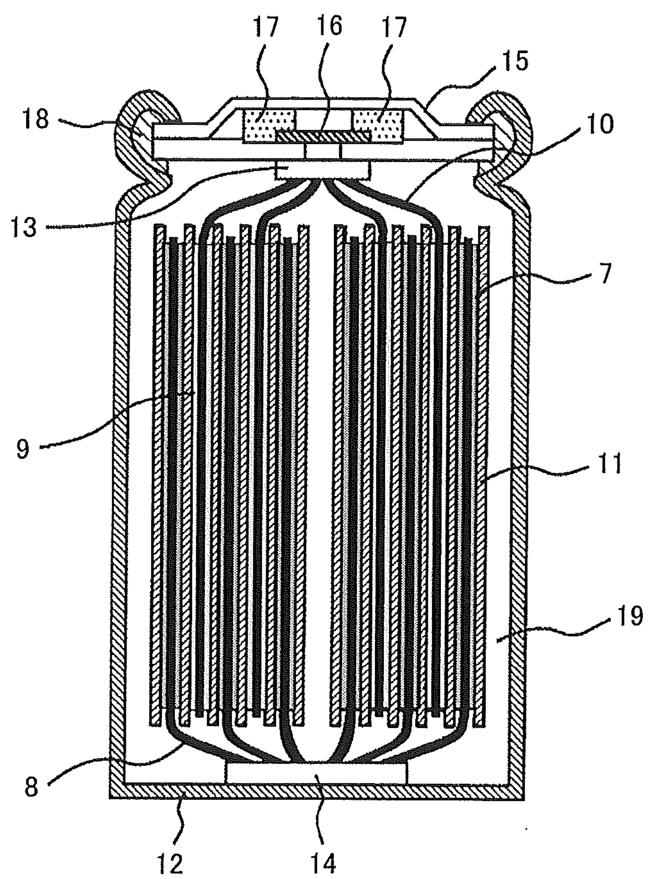

**INTERNATIONAL SEARCH REPORT**

International application No.
PCT/JP2010/004121

A. CLASSIFICATION OF SUBJECT MATTER
*H01M10/0567*(2010.01)i, *H01M4/505*(2010.01)i, *H01M4/525*(2010.01)i, *H01M4/587*(2010.01)i, *H01M10/0525*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M10/05-10/0587

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 2004-235145 A (NEC Corp.),<br>19 August 2004 (19.08.2004),<br>claims; paragraph [0083]<br>& US 2004/0137333 A1 & EP 1443586 A2<br>& KR 10-2004-0064645 A & CN 1518153 A | 1-3,7,9-17,<br>20,23<br>4-6,8,18,19,<br>21,22 |
| X<br>A | JP 2002-260735 A (Mitsubishi Chemical Corp.),<br>13 September 2002 (13.09.2002),<br>claims<br>(Family: none) | 24<br>1-23 |
| A | JP 2003-157900 A (Sony Corp.),<br>30 May 2003 (30.05.2003),<br>claims 4, 8<br>(Family: none) | 1-24 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 August, 2010 (20.08.10) | Date of mailing of the international search report<br>31 August, 2010 (31.08.10) |
| Name and mailing address of the ISA/<br>Japanese Patent Office<br><br>Facsimile No. | Authorized officer<br><br><br>Telephone No. |

Form PCT/ISA/210 (second sheet) (July 2009)

**INTERNATIONAL SEARCH REPORT**

International application No.
PCT/JP2010/004121

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-196463 A (Hitachi Maxell, Ltd.), 27 July 2006 (27.07.2006), claims 1, 6; example 2 (Family: none) | 1-24 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004014134 A